(19) Europäisches Patentamt
European Patent Office
Office européen des brevets

(11) EP 3 429 794 B1

(12) EUROPÄISCHE PATENTSCHRIFT

(45) Veröffentlichungstag und Bekanntmachung des Hinweises auf die Patenterteilung:
**23.09.2020 Patentblatt 2020/39**

(21) Anmeldenummer: **17710536.8**

(22) Anmeldetag: **13.03.2017**

(51) Int Cl.:
***B23K 26/03*** *(2006.01)* ***B23K 26/70*** *(2014.01)*
***B23K 31/12*** *(2006.01)* ***B23K 26/24*** *(2014.01)*

(86) Internationale Anmeldenummer:
**PCT/EP2017/055855**

(87) Internationale Veröffentlichungsnummer:
**WO 2017/157856 (21.09.2017 Gazette 2017/38)**

# (54) HEISSRISSERKENNEN BEIM LASERSCHWEISSEN

DETECTION OF HOT CRACKS IN LASER WELDING

DÉTECTION DE FISSURATIONS À CHAUD LORS D'UN SOUDAGE AU LASER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.03.2016 DE 102016204577**

(43) Veröffentlichungstag der Anmeldung:
**23.01.2019 Patentblatt 2019/04**

(73) Patentinhaber: **TRUMPF Laser- und Systemtechnik GmbH**
**71254 Ditzingen (DE)**

(72) Erfinder:
- **HAUG, Patrick**
  **70839 Gerlingen (DE)**
- **HESSE, Tim**
  **71254 Ditzingen (DE)**
- **KESSLER, Steffen**
  **70180 Stuttgart (DE)**
- **SCHÄFER, Marcel**
  **72393 Burladingen (DE)**
- **SCHEIBLE, Philipp**
  **71254 Ditzingen (DE)**

(74) Vertreter: **Kohler Schmid Möbus Patentanwälte Partnerschaftsgesellschaft mbB**
**Gropiusplatz 10**
**70563 Stuttgart (DE)**

(56) Entgegenhaltungen:
**EP-A1- 1 726 397 JP-A- H0 890 265**
**US-B2- 6 900 410**

- **MICHAEL SCHNEIDER: "Von Werkzeugstahl bis zur Superlegierung : Effizientes und prozessstabiles Laserschweißen im dreidimensionalen Raum", LASER TECHNIK JOURNAL, Bd. 10, Nr. 4, 3. September 2013 (2013-09-03), Seiten 24-27, XP055382766, ISSN: 1613-7728, DOI: 10.1002/latj.201300002 in der Anmeldung erwähnt**

EP 3 429 794 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Bestimmung der Qualität einer Schweißnaht eines mittels Laserstrahlschweißen entlang der Schweißnaht geschweißten Werkstücks,
wobei während des Laserstrahlschweißens zumindest ein Teilbereich eines Schmelzbades und/oder einer Umgebung des Schmelzbades mit einem Messsystem beobachtet wird,
und anhand des Beobachtungsergebnisses die Qualität der Schweißnaht des geschweißten Werkstücks bestimmt wird.

Ein solches Verfahren ist beispielsweise aus der DE 10 2007 024 789 B3 bekannt geworden.

Laserstrahlschweißen wird zum Schweißen von Werkstücken eingesetzt, die insbesondere schnell (mit hoher Vorschubgeschwindigkeit) gefertigt werden sollen oder nur einen geringen thermischen Verzug erfahren sollen. Mit Laserstrahlschweißen können zudem auch schmale und schlanke Schweißnahtformen gefertigt werden.

Beim Laserstrahlschweißen entsteht auf dem Werkstück um den Brennfleck des Laserstrahls ein so genanntes Schmelzbad von aufgeschmolzenem Werkstückmaterial. Dieses wandert im Wesentlichen mit dem Laserstrahl, der relativ zum Werkstück propagiert; entfernt vom Laserstrahl erstarrt das Werkstückmaterial wieder. Das wieder erstarrte Werkstückmaterial bildet eine Schweißnaht aus.

Bei der Erstarrung des Werkstückmaterials können sich so genannte Heißrisse bilden. Die Heißrisse können die Festigkeit der Schweißnaht stark beeinträchtigen. Daher ist die Kenntnis über das Auftreten von Heißrissen in einer Schweißnaht eine wichtige Qualitätsinformation über die Schweißnaht bzw. das Werkstück insgesamt.

Am fertig geschweißten Werkstück sind die in der Schweißnaht liegenden Heißrisse mit dem Auge grundsätzlich nicht zu erkennen. Heißrisse werden üblicherweise an Bruchflächen-Proben am fertig geschweißten Werkstück durch rasterelektronenmikroskopische Untersuchungen detektiert. Heißrisse können auch bei Röntgenaufnahmen oder Ultraschalluntersuchungen des Werkstücks erkannt werden. Diese Verfahren sind jedoch zeit- und arbeitsaufwändig.

Aus der DE 10 2007 024 789 B3 ist ein Verfahren zum Erkennen von Fehlern an einer Schweißnaht während eines Laserschweißprozesses bekannt geworden, wobei ortsaufgelöst Strahlung detektiert wird, die von einer sich an ein flüssiges Schmelzbad anschließende erstarrten Schmelze emittiert wird. Durch Auswertung der detektierten Strahlung entlang eines Profilschnitts der erstarrten Schmelze wird ein Kennwert für eine Wärmeabfuhr bestimmt, und durch Vergleich mit einem Referenzwert wird ein Fehler erkannt.

Die EP 2 094 429 B1 beschreibt ein Verfahren zur Prozessüberwachung beim Laserschweißen. Dabei wird die von der Kapillare, dem Schmelzbad und der erstarrten Schmelze emittierte Strahlung ortsaufgelöst bei zumindest zwei Wellenlängen erfasst. Mit dem Verfahren kann die Qualität des Bearbeitungsprozesses und der erzeugten Schweißnaht überwacht werden.

Die DE 11 2010 003 406 T5 schlägt vor, die Schweißgüte eines Schweißabschnitts und seines umgebenden Bereichs mit einer Hochgeschwindigkeitskamera zu überwachen und zu analysieren. Die analysierten Parameter, etwa die Anzahl der Schweißspritzer, werden mit Vergleichstabellen abgeglichen. Die DE 10 2014 107 716 B3 schlägt vor, einen Laserstrahl beim Laserschweißen räumlich oszillieren zu lassen, und die Oszillationsparameter während des Schweißprozesses dynamisch derart anzupassen, dass von einer Kamera erfasste Schweißspritzer reduziert werden.

Aus der DE 41 06 007 A1 ist es bekannt, beim Laserschweißen aus dem Plasma oder Dampf herrührende optische oder akustische Signale zu detektieren und einer Frequenzanalyse zu unterziehen, um die Einschweißtiefe und den Durchschweißgrad zu überwachen. Die EP 2 543 464 A2 schlägt vor, beim Laserschweißen die Strahlung eines von der Schweißzone ausgehenden Plasmas einer Frequenzanalyse zu unterziehen, und mit einem aktiven optischen Element den Laserstrahl gemäß der Analyse zu gestalten, etwa hinsichtlich der Fokuslage, so dass die Schweißqualität optimiert wird.

Aus der DE 10 2013 015 656 A1 ist ein Verfahren zum Messen der Eindringtiefe eines Laserstrahls in ein Werkstück mittels optischer Kohärenztomographie (OTC) bekannt geworden, wobei ein erster Messstrahl auf das noch unbearbeitete Werkstück und ein zweiter Messstrahl auf die Schweißkapillare gerichtet ist. In Abhängigkeit von der gemessenen Eindringtiefe kann ein Parameter der Laserbearbeitung verändert werden. Eine interferometrische Vermessung einer Kapillartiefe beim Laserschweißen ist auch aus der WO 2014/138939 A1 bekannt geworden.

Die US 6,900,410 B2 beschreibt ein Verfahren zum Laserstrahlschweißen, wobei die Laserleistung gepulst moduliert ist, und wobei die Modulationsfrequenz einer natürlichen Oszillationsfrequenz des Schmelzbades entspricht. Dadurch sollen Schweißdefekte, insbesondere Risse, verhindert werden. Das Laserschweißen erfolgte an Stahlplatten.

In M. Schneider, "Von Werkzeugstahl bis zur Superlegierung", Laser-Journal 4/2013, S. 24-27, wird vorgeschlagen, beim Laserstrahlschweißen einen gepulsten Laser einzusetzen, und mit Hilfe von thermischer Pulsformung eine Anpassung an das Absorptionsverhalten des Werkstoffs vorzunehmen. Mit Nachpulsphasen sollen sich Heißrisse verhindern lassen. Weiterhin könne durch Modulation der Laserleistung die Schmelzbad-Dynamik und damit die Erstarrungsmorphologie beeinflusst werden.

Aufgabe der Erfindung

Der Erfindung liegt die Aufgabe zugrunde, ein vereinfachtes Verfahren bereitzustellen, mit dem auf die Qualität einer Schweißnaht geschlossen werden kann.

Kurze Beschreibung der Erfindung

Diese Aufgabe wird gelöst durch ein Verfahren der eingangs genannten Art, das dadurch gekennzeichnet ist, dass während des Laserstrahlschweißens wenigstens eine Kenngröße, die mit einer Schmelzbadoszillation des Schmelzbades korreliert, beobachtet wird, und aus dem beobachteten zeitlichen Verlauf der Kenngröße eine Maßgröße für eine Amplitude der Schmelzbadoszillation und/oder eine Maßgröße für eine Frequenz der Schmelzbadoszillation ermittelt wird,
und dass aus der Maßgröße für die Amplitude der Schmelzbadoszillation und/oder der Maßgröße für die Frequenz der Schmelzbadoszillation auf eine Wahrscheinlichkeit und/oder eine Häufigkeit für das Auftreten von Heißrissen an der Schweißnaht des Werkstücks geschlossen wird.

Im Rahmen der Erfindung wurde festgestellt, dass Schmelzbadoszillationen mit dem Auftreten von Heißrissen korrelieren. Insbesondere konnte beobachtet werden, dass die Frequenz von Schmelzbadoszillationen (beispielsweise direkt gemessen durch die Schmelzbadlänge oder indirekt gemessen durch einen Grauwert in einem festen Punkt im Schmelzbad oder in der Wärmespur) mit der Frequenz von auftretenden Heißrissen übereinstimmt. Weiterhin hat sich gezeigt, dass bei einer Verfahrensführung des Laserstrahlschweißens, bei der die Schmelzbadoszillationen eine geringe oder verschwindenden Amplitude aufweisen, Heißrisse seltener auftreten oder ganz vermieden werden können. Diese beobachteten Korrelationen können dazu genutzt werden, um aus dem Verhalten des Schmelzbades bei der Durchführung des Laserstrahlschweißens, nämlich aus einer Maßgröße für die Amplitude und einer Maßgröße für die Frequenz der Schmelzbadoszillation, auf die Rissneigung bzw. die Wahrscheinlichkeit und die Häufigkeit für das Auftreten von Heißrissen in der geschweißten Schweißnaht zu schließen.

Die Schweißbadoszillation ist eine im Wesentlichen periodische Vergrößerung und Verkleinerung des Schmelzbades, die im Allgemeinen (wenn nicht Gegenmaßnahmen getroffen werden) beim Laserstrahlschweißen auftritt, ungeachtet von etwaigen Schweißspritzern.

Das erfindungsgemäße Verfahren kann mit vergleichsweise einfachen Messsystemen noch während des Laserschweißprozesses angewandt werden, was besonders schnelle Qualitätsaussagen ermöglicht. Es ist nicht nötig, ein Werkstück nach Abschluss des Schweißens besonders zu präparieren (etwa eine Bruchfläche oder einen Querschliff zu präparieren) oder in eine besondere Messapparatur (etwa ein Rasterelektronenmikroskop, ein Röntgengerät oder eine Ultraschallmessstation) zu verbringen.

Zur Beobachtung von Kenngrößen, die auf die Schmelzbadoszillationen schließen lassen, können insbesondere Messsysteme eingesetzt werden, die die Signale aus den Prozessregionen Schmelzbad und/oder Wärmespur empfangen (insbesondere wenn die Laserleistung moduliert ist); im Einzelfall (insbesondere wenn keine Modulation der Laserleistung stattfindet) kann auch aus der Prozessregion der Dampfkapillare des Schweißprozesses ein Signal ausgewertet werden. Die Messsysteme können passiv beobachten (etwa eine Wärmebildkamera) oder auch ein Messsignal von außen vorgeben (einstrahlen), dass mit dem Werkstück bzw. der Werkstückoberfläche wechselwirkt und dann mit dem Messsystem detektiert wird (etwa mit einem Weißlichtinterferometer). Die Messsysteme können an oder in einer Schweißoptik integriert sein, und insbesondere mit der Schweißoptik bewegt werden.

Im Rahmen der Erfindung kann beispielsweise erfolgen:

(1) eine Erfassung der Wärmestrahlung durch

(a) eine (hinreichend schnelle) Kamera (sichtbar, nahinfrarot, infrarot),
(b) ein Pyrometer, das auf einen Punkt in der Schmelze oder der erstarrten Wärmespur gerichtet ist,
(c) eine Photodiode, die auf den Brennfleck/die Kapillare gerichtet ist,

(2) eine Erfassung einer durch eine Beleuchtung der Prozesszonen reflektierten Strahlung mit einer Kamera,
(3) eine Erfassung eines Interferenzsignals, dessen Messstrahl auf die Kapillare gerichtet ist, mit Hilfe eines Weißlichtinterferometers (OCT),
(4) eine Erfassung eines Spektrums des Brennflecks mit einem Spektrometer,
(5) eine Erfassung des Körper- oder Luftschalls.

Exemplarische Messwerte bei den einzelnen Messmethoden sind:

(1a, 2) die Schmelzbadlänge, die Schmelzbadbreite, die Schmelzbadfläche im Wärmebild,

(1a) die Abklinglänge, die Wärmespurbreite in der Wärmespur im Wärmebild, (1a, b, c) die Grauwerte/erfassten Intensitäten und/oder Temperaturwerte an relativ zum Brennfleck festen örtlichen Stellen in Kapillare, Schmelze oder Wärmespur,

(3) die Tiefenbeurteilungen der Signale aus der Kapillare oder die Kapillartiefe.

Anhand der aus der Kenngröße ermittelten Maßgrößen für die Frequenz und die Amplitude der Schmelzbadoszillation kann die Rissneigung quantifiziert werden bzw. eine Rissentstehung detektiert werden.

Typischerweise werden aus dem zeitlichen Verlauf der mit dem Messsystem beobachteten Kenngröße sowohl die Maßgröße für die Amplitude als auch die Maßgröße für die Frequenz der Schmelzbadoszillation ermittelt. Es ist aber auch möglich, lediglich die Maßgröße für die Amplitude der Schmelzbadoszillation zu ermitteln, insbesondere wenn nur die Wahrscheinlichkeit des Auftretens von Heißrissen relevant ist. Ebenso ist es möglich, lediglich die Maßgröße für die Frequenz der Schmelzbadoszillation zu ermitteln, insbesondere wenn nur die Häufigkeit von Heißrissen relevant ist, oder wenn deren Auftreten bereits anderweitig bekannt ist.

Wenn die Frequenz (oder das Frequenzintervall) der Schmelzbadoszillation bereits mit ausreichender Genauigkeit bekannt ist (etwa aus einem Vorversuch, typischerweise ohne Leistungsmodulation des Lasers), kann die Auswertung des zeitlichen Verlaufs der Kenngröße auch auf die Bestimmung der Maßgröße für die Amplitude der Schmelzbadoszillation beschränkt werden (etwa durch Feststellung der Schwankungsbreite der Kenngröße).

Die Maßgröße für die Amplitude wird mit größerer Amplitude der Schmelzbadoszillation größer, bevorzugt (aber nicht notwendiger Weise) direkt proportional, und umgekehrt. Entsprechendes gilt für die Maßgröße der Frequenz; in der Regel entspricht die Maßgröße der Frequenz sogar direkt der Frequenz der Schmelzbadoszillation.

Im Allgemeinen erhöht eine höhere Amplitude der Schmelzbadoszillation die Wahrscheinlichkeit für das Auftreten von Heißrissen und umgekehrt. Im Allgemeinen erhöht auch weiterhin eine höhere Frequenz der Schmelzbadoszillation die Häufigkeit des Auftretens von Heißrissen (in der Regel mit direkter Proportionalität), und umgekehrt.

In der Praxis erfolgt die Schmelzbadoszillation im Allgemeinen in einem Frequenzband. Dieses kann im Rahmen der Erfindung insgesamt betrachtet werden, um auf eine Wahrscheinlichkeit und/oder Häufigkeit der Heißrissentstehung zu schließen; ggf. kann über die Frequenzanteile (Intensitäten) in diesem Frequenzband summiert werden, um die Kenngröße für die Amplitude des Schmelzbades zu erhalten, und für die Kenngröße der Frequenz des Schmelzbades kann eine mittlere Frequenz des Frequenzbandes gebildet werden. Insoweit steht der Begriff "Frequenz" auch für dieses Frequenzband und dessen mittlere Frequenz.

Die erfindungsgemäße Bestimmung der Qualität einer Schweißnaht bezieht sich typischerweise auf die Schweißnaht eines Werkstückes insgesamt, deren gesamte Fertigung beobachtet wurde. Es ist aber erfindungsgemäß auch möglich, lediglich einen Schweißnahtabschnitt einer Gesamtschweißnaht bei der Fertigung zu beobachten und zu beurteilen.

Das erfindungsgemäße Verfahren kann insbesondere dazu eingesetzt werden, Axialrundnähte oder Radialrundnähte zu beurteilen. Untersuchte Werkstücke können insbesondere Getriebeteile (wie Schalträder oder Zwischenwellen) oder lasergeschweißte Stahlkolben sein.

Bevorzugte Ausführungsformen der Erfindung

Bei einer bevorzugten Variante des erfindungsgemäßen Verfahrens wird für die Bestimmung der Wahrscheinlichkeit und/oder Häufigkeit für das Auftreten von Heißrissen die Maßgröße für die Amplitude der Schmelzbadoszillation mit wenigstens einem Schwellenwert verglichen,

insbesondere wobei bei einer Maßgröße für die Amplitude der Schmelzbadoszillation oberhalb eines Sättigungs-Schwellenwerts angenommen wird, dass stets ein Heißriss (oder wenigstens ein Heißriss) im Werkstück je Amplitudenmaximum auftritt. Dieses Vorgehen ist einfach und schnell anwendbar. Der oder die Schwellenwerte können über Vorversuche ermittelt werden, bei denen sowohl das Verhalten des Schweißbades beobachtet wurde als die tatsächlichen entstandenen Heißrisse ermittelt wurden (etwa über Röntgenaufnahmen). Die Maßgröße für die Amplitude kann vor dem Vergleich mit dem Schwellenwert noch normiert werden, etwa durch Quotientenbildung mit einer durchschnittlichen Amplitude aller beobachteten Frequenzanteile im Schmelzbad. Man beachte, dass es weiterhin möglich ist, für die Bestimmung der Wahrscheinlichkeit und/oder Häufigkeit des Auftretens von Heißrissen die Maßgröße für die Frequenz der Schmelzbadoszillation mit wenigstens einem Schwellenwert zu vergleichen.

Besonders bevorzugt ist eine Variante, bei der das Laserstrahlschweißen mit einer Laserleistung erfolgt, die mit einer Modulationsfrequenz f und einer Modulationsamplitude $\Pi$ moduliert ist, mit $\Pi = 1 - \frac{P\min}{P\max}$, mit $P_{min}$: minimale Laserleistung während einer Modulationsperiode, und $P_{max}$: maximale Laserleitung während einer Modulationsperiode. Durch Modulation der Laserleistung beim Laserstrahlschweißen kann, geeignete Modulationsfrequenz f, Mo-

dulationsamplitude $\Pi$ und mittlere (durchschnittliche) Laserleistung $P_{av}$ vorausgesetzt, die Heißrissbildung erheblich reduziert oder sogar verhindert werden. Mit dem erfindungsgemäßen Verfahren kann der Erfolg der Leistungsmodulation in Hinblick auf die Schweißnahtqualität einfach und schnell abgeschätzt werden. Die Modulationsfrequenz f ist für eine niedrige Heißrisswahrscheinlichkeit bevorzugt deutlich größer als die Frequenz der charakteristischen (im unmodulierten Fall auftretenden) Schmelzbadoszillation, beispielsweise wenigstens um einen Faktor 2, bevorzugt um einem Faktor zwischen 2 und 8. Typischerweise ist $P_{min} > 0$. Typischerweise sind Modulationsfrequenz f und (normierte) Modulationsamplitude $\Pi$ während der Fertigung eines Werkstücks konstant; am Schweißnahtanfang und Schweißnahtende wird jedoch die durchschnittliche Laserleistung $P_{av}$ meist hoch- bzw. heruntergefahren.

Bei einer bevorzugten Weiterentwicklung dieser Verfahrensvariante wird die Laserleistung näherungsweise sinusförmig moduliert, insbesondere wobei die Sinusform durch wenigstens 12, bevorzugt wenigstens 18, Stützpunkte je Modulationsperiode angenähert ist. Durch die Sinusform werden hohe Frequenzanteile in der Modulation vermieden, was sich als günstig für eine geringe Heißrisswahrscheinlichkeit erwiesen hat. Die Nutzung von Stützpunkten ist besonders einfach. Alternativ kann auch eine gepulste Modulation eingesetzt werden.

Bevorzugt ist eine Verfahrensvariante, bei der das Werkstück aus Stahl besteht. Mit Stahlwerkstoffen, einschließlich Vergütungsstählen und Einsatzstählen, haben sich besonders zuverlässig Aussagen über die Rissneigung erstellen lassen. Der Laser ist typischerweise ein Festkörperlaser, etwa ein Nd-YAG oder ein Yb-YAG-Laser.

Vorteilhaft ist weiterhin eine Verfahrensvariante, bei der die wenigstens eine Kenngröße eine geometrische Größe des Schmelzbades umfasst, insbesondere wobei diese geometrische Größe des Schmelzbades mit einer Kamera erfasst wird. Die direkte Beobachtung einer Schmelzbadgröße ist besonders zuverlässig und auch einfach möglich. Die Kamera kann beispielsweise sichtbares Licht oder IR-Licht detektieren. Die Kamera ist typischerweise koaxial zum Laserstrahl ausgerichtet.

Bei einer Weiterentwicklung dieser Variante ist die geometrische Größe eine Schmelzbadlänge oder eine Schmelzbadbreite oder eine Schmelzbadfläche. Die Schmelzbadlänge weist vergleichsweise große Schwankungen mit der Schmelzbadoszillation auf und ist insoweit ein guter Indikator für das Schmelzbadverhalten. Die Schmelzbadfläche (Größe der Schmelzbadoberfläche) erlaubt besonders zuverlässige Aussagen über die Schmelzbadoszillation. Für die Ermittlung der Schmelzbadbreite muss meist nur ein relativ kleiner Bildausschnitt überwacht werden.

Besonders bevorzugt ist eine Variante, bei der die wenigstens eine Kenngröße eine lokale Temperatur im Schmelzbad oder in einer Wärmespur des Schmelzbades an einem Ort auf dem Werkstück, der fest zu einem Laserstrahl-Brennfleck positioniert und beabstandet ist, umfasst,
insbesondere wobei die lokale Temperatur mit einem Pyrometer oder einer Wärmebildkamera erfasst wird. Die lokale Temperaturmessung (Beobachtung) ist besonders einfach. Der Ort der Temperaturmessung ist typischerweise mit einem Abstand entsprechend wenigstens dem doppelten Durchmesser des Laserstrahl-Brennflecks (und bevorzugt sogar um wenigstens ¼ der kleinsten Schmelzbadlänge) vom Laserstrahl-Brennfleck beabstandet; dies verringert die Gefahr von Verfälschungen der Messung aufgrund von Leistungsmodulation. Der Ort der Temperaturmessung wandert mit dem Laserstrahl auf dem Werkstück.

Bei einer weiteren Variante umfasst die Kenngröße eine geometrische Größe einer Schweißkapillare über einem Laserstrahl-Brennfleck,
insbesondere wobei die geometrische Größe der Schweißkapillare mit einem Messstrahl und einem Weißlichtinterferometer bestimmt wird. Die Grenzfläche zwischen Metalldampf und Schmelze am Rand der Schweißkapillare bietet in Messverfahren starke, gut zu detektierende Kontraste. Messungen an der Kapillare (etwa eine Messung der Kapillartiefe) werden vor allem eingesetzt, wenn die Laserleistung konstant bzw. unmoduliert ist; ansonsten besteht bei höheren Modulationsamplituden die Gefahr, lediglich die Leistungsmodulation, nicht aber die eigentliche Schmelzbadoszillation zu vermessen.

Besonders bevorzugt ist eine Variante, bei der der beobachtete zeitliche Verlauf der Kenngröße einer Fourier-Transformation unterzogen wird. Mit der Fouriertransformation kann auf einfache Weise die Maßgröße für die Amplitude und die Maßgröße für die Frequenz der Schmelzbadoszillation ermittelt werden. Die Schmelzbadoszillation umfasst (bzw. verursacht) typischerweise den absolut stärksten, im Fourierspektrum auftretenden Frequenzanteil. Die Maßgröße der Amplitude der Schmelzbadoszillation wird typischerweise normiert, etwa durch Quotientenbildung der Amplitude des zur Schmelzbadoszillation gehörenden Frequenzanteils (oder Frequenzanteile) im Fourierspektrum mit der durchschnittlichen Amplitude aller Frequenzanteile im Fourierspektrum, bevor auf die Wahrscheinlichkeit und/oder Häufigkeit des Auftretens von Heißrissen geschlossen wird. Alternativ zu einer Fouriertransformation kann beispielsweise eine Maßgröße für eine maximale Amplitude der Schmelzbadoszillation über die Schwankungsbreite der Kenngröße entlang der Schweißnaht bestimmt werden.

*Verfahren zur Optimierung von Fertigungsparametern geschweißter Werkstücke*

In den Rahmen der vorliegenden Erfindung fällt auch ein Verfahren zur Optimierung eines oder mehrerer Fertigungsparameter von geschweißten Werkstücken,
wobei eine Vielzahl von Werkstücken mittels Laserstrahlschweißen entlang einer Schweißnaht geschweißt werden,
wobei die Werkstücke jeweils mit unterschiedlichen Werten eines Fertigungsparameters oder Wertekombinationen mehrerer Fertigungsparameter gefertigt werden,
wobei für die Werkstücke jeweils die Wahrscheinlichkeit und/oder die Häufigkeit für das Auftreten von Heißrissen an der Schweißnaht nach einem erfindungsgemäßen, obigen Verfahren bestimmt wird,
wobei wenigstens ein bestes Werkstück aus der Vielzahl von Werkstücken ermittelt wird, mit dessen Wert oder Wertkombination des oder der Fertigungsparameter eine kleinste Wahrscheinlichkeit und/oder eine kleinste Häufigkeit für das Auftreten von Heißrissen in der Schweißnaht erhalten wurde, und wobei der Wert oder die Wertekombination des besten Werkstücks als Basis für eine Bestimmung der optimalen Fertigungsparameter herangezogen wird. Damit ist es möglich, auf einfache und schnelle Weise Fertigungsparameter für einen dem Verfahren zugrunde gelegten Typus von Werkstück optimale Fertigungsparameter zu bestimmen, um das Auftreten von Heißrissen zu minimieren. Im einfachsten Fall werden der Wert oder die Wertekombination des besten Werkstücks direkt als optimale Fertigungsparameter bestimmt; im Einzelfall kommen auch abgeleitete optimale Fertigungsparameter in Betracht, etwa eine gegenüber dem besten Werkstück abgeänderte Modulationsfrequenz f bei ebenfalls abgeänderter Vorschubgeschwindkeit v, unter Beibehaltung der normierten Modulationsfrequenz $\Lambda$, mit $\Lambda = \frac{f \cdot d_f}{v}$, mit $d_f$: Durchmesser LaserstrahlBrennfleck. Falls mehrere Werkstücke die gleiche, kleinste Wahrscheinlichkeit und/oder gleiche, kleinste Häufigkeit für das Auftreten von Heißrissen (insbesondere eine Wahrscheinlichkeit von "null") aufweisen, können diese alle als "beste" Werkstücke aufgefasst werden. Die optimalen Fertigungsparameter können für eine standardisierte Produktion (Serienproduktion) der Werkstücke mit minimierten Heißrissen verwendet werden. Typische zu optimierende Fertigungsparamter sind die (durchschnittliche) Laserleistung, die Vorschubgeschwindigkeit, eine Modulationsfrequenz, eine Modulationsamplitude, das Strahlparameterprodukt u.v.m.

Bevorzugt ist eine Variante dieses erfindungsgemäßen Verfahrens, die vorsieht, dass das Laserstrahlschweißen eines jeweiligen Werkstücks mit einer Laserleistung erfolgt, die mit einer Modulationsfrequenz f und einer Modulationsamplitude $\Pi$ moduliert ist, mit $\Pi = 1 - \frac{P\min}{P\max}$, mit $P_{min}$: minimale Laserleistung während einer Modulationsperiode, und $P_{max}$: maximale Laserleitung während einer Modulationsperiode,
und dass bei den jeweiligen Werkstücken unterschiedliche Wertekombinationen von Modulationsfrequenz f und Modulationsamplitude $\Pi$ als Fertigungsparameter angewandt werden. Durch Modulieren der Laserleistung kann die Schmelzbadoszillation stark beeinflusst werden, bzw. die Rissneigung stark verändert werden. Durch das erfindungsgemäße Verfahren kann eine optimale Wertekombination von Modulationsfrequenz f und Modulationsamplitude $\Pi$ bestimmt werden. Vorteilhafter Weise kann zusätzlich auch noch eine mittlere Laserleistung $P_{av}$ als Fertigungsparameter mit optimiert werden.

Besonders bevorzugt ist eine Variante, bei der das beste Werkstück ermittelt wird, indem das Werkstück mit der kleinsten Maßgröße für die Amplitude der Schmelzbadoszillation aller Werkstücke ausgewählt wird. Dieses Vorgehen ist besonders einfach und nutzt den Umstand, dass in der Regel eine niedrige Amplitude der Schmelzbadoszillation mit einer niedrigen Heißriss-Bildungswahrscheinlichkeit einhergeht.

*Verfahren zur Regelung von Fertigungsparametern während des Laserstrahlschweißens*

Weiterhin fällt in den Rahmen der vorliegenden Erfindung ein Verfahren zur Regelung eines oder mehrerer Fertigungsparameter während des Laserstrahlschweißens eines Werkstücks,
wobei das Werkstück mittels Laserstrahlschweißen entlang einer Schweißnaht geschweißt wird,
wobei das Laserstrahlschweißen in Abhängigkeit von einem oder mehreren Fertigungsparametern erfolgt,
wobei die Wahrscheinlichkeit und/oder die Häufigkeit für das Auftreten von Heißrissen an der Schweißnaht wie oben beschrieben erfindungsgemäß während des Laserstrahlschweißens des Werkstücks wiederholt bestimmt wird, und wobei der Wert des Fertigungsparameters oder die Werte der Fertigungsparameter während des Laserstrahlschweißens des Werkstücks derart nachgeregelt werden, dass die Wahrscheinlichkeit und/oder die Häufigkeit für das Auftreten von Heißrissen an der Schweißnaht minimiert sind. Da das obige erfindungsgemäße Verfahren zur Bestimmung der Qualität der Schweißnaht bzw. der Bestimmung der Wahrscheinlichkeit und/oder Häufigkeit für das Auftreten von Heißrissen bereits während des Laserstrahlschweißens angewandt werden kann, kann es auch auf bereits gefertigte Teilabschnitte von noch unvollständigen Schweißnähten angewandt werden, was eine online-Regelung der Fertigungsparameter während der Fertigung der Schweißnaht zugänglich macht. Somit ist es möglich, noch während der Fertigung eines Werkstücks die Fertigungsparameter zu optimieren und laufend etwaigen geänderten Umständen anzupassen. Dadurch kann die Qualität von gefertigten Werkstücken bzw. Schweißnähten verbessert werden.

Vorteilhaft ist auch eine Variante dieses erfindungsgemäßen Verfahrens, die vorsieht,
dass das Laserstrahlschweißen des Werkstücks mit einer Laserleistung erfolgt, die mit einer Modulationsfrequenz f und einer Modulationsamplitude $\Pi$ moduliert ist, mit $\Pi = 1 - \frac{P\min}{P\max}$, mit $P_{min}$: minimale Laserleistung während einer Modulationsperiode, und $P_{max}$: maximale Laserleitung während einer Modulationsperiode,
und dass der Wert der Modulationsfrequenz f und/oder der Wert der Modulationsamplitude $\Pi$ als Fertigungsparameter während des Laserstrahlschweißens des Werkstücks derart nachgeregelt werden, dass die Wahrscheinlichkeit und/oder die Häufigkeit für das Auftreten von Heißrissen an der Schweißnaht minimiert sind. Durch Modulieren der Laserleistung kann die Schmelzbadoszillation stark beeinflusst werden, bzw. die Rissneigung stark verändert werden. Durch das erfindungsgemäße Verfahren kann eine geeignete Wertekombination von Modulationsfrequenz f und Modulationsamplitude $\Pi$ eingeregelt werden. Vorteilhafter Weise kann zusätzlich auch noch eine mittlere Laserleistung $P_{av}$ als Fertigungsparameter mit geregelt werden.

Bevorzugt ist dabei eine Weiterentwicklung dieser Variante, bei der für das wiederholte Bestimmen der Wahrscheinlichkeit und/oder der Häufigkeit für das Auftreten von Heißrissen an der Schweißnaht lediglich der zeitliche Verlauf der Kenngröße seit einer letzten Nachregelung berücksichtigt wird, wobei zwischen zwei Nachregelungen wenigstens fünf Modulationsperioden der Modulation der Laserleistung stattfinden. Durch dieses Vorgehen ist sichergestellt, dass auch die Auswirkungen der veränderten Fertigungsparameter über die Kenngröße gut erfasst werden. Es ist auch möglich, nach einer Nachregelung zunächst einige Modulationsperioden (beispielsweise wenigstens fünf) unberücksichtigt zu lassen; in diesem Fall liegen zwischen zwei Nachregelungen meist wenigstens zehn Modulationsperioden.

Ebenfalls bevorzugt ist eine Weiterentwicklung, bei der die Wahrscheinlichkeit und/oder die Häufigkeit für das Auftreten von Heißrissen an der Schweißnaht dadurch minimiert sind, dass der Wert des Fertigungsparameters oder die Werte der Fertigungsparameter so nachgeregelt werden, dass die Maßgröße für die Amplitude der Schmelzbadoszillation minimiert ist. Dieses Vorgehen ist besonders einfach und nutzt den Umstand, dass in der Regel eine niedrige Amplitude der Schmelzbadoszillation mit einer niedrigen Heißriss-Bildungswahrscheinlichkeit einhergeht.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

## Detaillierte Beschreibung der Erfindung und Zeichnung

Die Erfindung ist in der Zeichnung dargestellt und wird anhand von Ausführungsbeispielen näher erläutert. Es zeigen:

Fig. 1 eine schematische Querschnittsansicht eines Werkstücks beim Laserstrahlschweißen zur Erläuterung der Erfindung;

Fig. 2 eine schematische Aufsicht auf ein Werkstück beim Laserschweißen zur Erläuterung der Erfindung;

Fig. 3 ein Diagramm mit experimentell ermittelten Frequenzen (nach oben) von Heißrissen (Rauten) und Schmelzbadoszillationen (Kreise), bei verschiedenen Laservorschubgeschwindigkeiten (nach rechts),

Fig. 4 ein Diagramm darstellend eine experimentell bestimmten Schmelzbadlänge (nach oben) als Funktion der Zeit (nach rechts), bei einem mit konstanter Laserleistung geschweißten Werkstück;

Fig. 5 ein Diagramm darstellend die Fouriertransformation der Daten von Fig. 4, aufgetragen die (Fourier-)Amplitude des jeweiligen Frequenzanteils (nach oben) gegen Frequenz (nach rechts);

Fig. 6 ein Diagramm darstellend die Laserleistung (nach oben) als Funktion der Zeit (nach rechts) beim Werkstück von Fig.4;

Fig. 7 ein Röntgenaufnahme des Werkstücks von Fig. 4, seitlich auf die Naht, mit zahlreichen Heißrissen;

Fig. 8 ein Diagramm darstellend eine experimentell bestimmte Schmelzbadlänge (nach oben) als Funktion der Zeit (nach rechts), bei einem mit optimierter, modulierter Laserleistung geschweißten Werkstück;

Fig. 9 ein Diagramm darstellend die Laserleistung (nach oben) als Funktion der Zeit (nach rechts) beim Werkstück von Fig.8;

Fig. 10 eine Röntgenaufnahme des Werkstücks von Fig. 8, seitlich auf die Naht, ohne Heißrisse;

Fig. 11 ein beispielhaftes Diagramm darstellend eine Kenngröße für die Amplitude einer Schmelzbadoszillation (nach oben) als Funktion derZeit (nach rechts), mit eingezeichneter Schwankungsbreite.

Fig. 12 ein Diagramm darstellend eine gemessene Kapillartiefe (nach oben) als Funktion der Zeit (nach rechts), beim Lasterstrahlschweißen eines Werkstücks, ohne Leistungsmodulation;

Fig. 13 ein Diagramm darstellend eine gemessene Kapillartiefe (nach oben) als Funktion der Zeit (nach rechts), beim Lasterstrahlschweißen eines Werkstücks, mit Leistungsmodulation.

**Fig. 1** zeigt in einer Übersichtsdarstellung eine Schweißbearbeitung eines hier metallischen Werkstücks 1 mit einem Laserstrahl 2. Der Laserstrahl 2 wird von einer Schweißoptik 2a aus auf das Werkstück 1 gerichtet. Der Laserstrahl 2 dringt von der Oberfläche aus in das Werkstück 1 ein und verdampft in seiner unmittelbaren Umgebung das Werkstückmaterial. Es bildet sich eine Metalldampfkapillare (auch kurz genannt Kapillare) 3 bis zu einem Grund 3a aus. In der Umgebung der Kapillare 3 wird das Werkstückmaterial aufgeschmolzen, wodurch sich ein sogenanntes Schmelzbad 4 von flüssigem Werkstückmaterial bildet. Da der Laserstrahl 2 beim Schweißen relativ zum Werkstück 1 bewegt wird, hier nach links, ist das Schmelzbad 4 im Querschnitt nach rechts ausgesackt. An der linken Kante 4a und der unteren Kante 4b des Schmelzbades 4 wird Werkstückmaterial aufgeschmolzen, während an der rechten Kante 4c des Schmelzbades 4 Werkstückmaterial wieder erstarrt. Dabei können Heißrisse 11 in der Schweißnaht auftreten.

Während des Laserstrahlschweißens ist die Größe des Schweißbades 4 nicht konstant, sondern schwankt in näherungsweise periodischer Weise (unabhängig von etwaigen Schweißspritzern an der Schmelzbadoberfläche); dieses Phänomen wird als Schmelzbadoszillation bezeichnet. Die Schmelzbadoszillation kann insbesondere an einer veränderlichen Schmelzbadlänge SL erkannt werden. In vielen Fällen korreliert die Schmelzbadoszillation mit der Größe der Kapillare 3, etwa der Kapillartiefe KT; man beachte jedoch, dass bei stark modulierter Laserleistung die Schmelzbadoszillation durch die Auswirkungen der Leistungsmodulation überlagert bzw. dominiert werden kann, insbesondere nahe der Kapillare 3. Die Schmelzbadoszillation wird mittels eines Messsystems 8, das hier mit der Schweißoptik 2a mechanisch gekoppelt ist, beobachtet.

In **Fig. 2** ist in einer Aufsicht das Werkstück 1 von Fig. 2 zu sehen, das hier aus zwei Werkstückteilen 1a, 1b besteht und entlang der Schweißnaht 5 geschweißt wird. Der Laserstrahl-Brennfleck 6 wird relativ zum Werkstück 1 nach links bewegt, so dass sich vor allem rechts des Laserstrahl-Brennflecks 6 das Schmelzbad 4 ausbildet. Dessen Größe schwankt im Wesentlichen periodisch zwischen einer kleinsten Ausdehnung 7 (durchgezogen dargestellt) und einer größten Ausdehnung 8 (gepunktet dargestellt).

Im Rahmen der Erfindung wird zumindest eine Kenngröße, die die zeitliche Entwicklung der Größe des Schmelzbades repräsentiert, erfasst. Am einfachsten wird dazu die Größe des Schmelzbades unmittelbar erfasst, insbesondere mit einer Wärmebildkamera. Beispielsweise kann der Teil der Fläche des Werkstücks, dessen Temperatur oberhalb der Schmelztemperatur des Werkstückmaterials (oder zwischen Schmelztemperatur und Verdampfungstemperatur) liegt, regelmäßig oder kontinuierlich erfasst werden. In der Regel genügt es aber, beispielsweise die Schmelzbadlänge SL oder die Schmelzbadbreite SB zu erfassen, etwa als Abstand der gegenüberliegenden Materialpunkte, bei denen gerade die Schmelztemperatur (bzw. Erstarrungstemperatur) herrscht. Ebenso ist es möglich, die Temperatur an einem bezüglich der Position des Laserstrahl-Brennflecks 6 festen Punkt 9 im Schmelzbad 4 oder festen Punkt 10 in einer Wärmespur des Schmelzbades 4 regelmäßig oder kontinuierlich zu erfassen. Typischerweise sind die festen Punkte 9, 10 dabei um ein Vielfaches (z.B. wenigstens 2- faches oder wenigstens 4-faches) des Durchmessers DB des Laserstrahl-Brennflecks 6 vom Rand des Laserstrahl-Brennflecks 6 beabstandet, oder auch um wenigstens ¼ der kleinsten Schmelzbadlänge SL (bei Ausdehnung 7) entlang der Schweißrichtung vom Rand des Laserstrahl-Brennflecks 6 beabstandet. Die festen Punkte 9, 10 können, müssen aber nicht in der Mitte der Schweißnaht 5 liegen.

Für die **Fig. 3** wurden verschiedene Schweißnähte an Werkstücken aus Stahl (Typ 42CrMoS4) mit einem Yb-YAG-Laser gefertigt, bei einer Einschweißtiefe (EST) von 4 mm und einem Strahlparameterprodukt (SPP) von 16 mm*mrad, wobei verschieden Vorschubgeschwindigkeiten (nach rechts aufgetragen) eingesetzt wurden. Die Laserleistung war unmoduliert.

In den Schweißnähten traten Heißrisse mit den durch Rauten markierten Frequenzen (nach oben aufgetragen) auf; durch Division mit der jeweiligen Vorschubgeschwindigkeit ergibt sich die Anzahl der Heißrisse je Länge in der Schweißnaht.

Während des Laserschweißens wurden zudem jeweils die Oszillationsfrequenzen des Schweißbades (bzw. die Frequenzen der Erstarrungsstruktur) bestimmt; diese Frequenzen sind mit Kreisen markiert.

Wie aus dem Diagramm ersichtlich ist, stimmen die Oszillationsfrequenzen des Schmelzbades und die Rissfrequenzen sehr gut überein. Daraus wird ersichtlich, dass die Schmelzbadoszillation mit der Rissentstehung in einer Weise korreliert, die für eine Qualitätsbeurteilung der Schweißnaht genutzt werden kann.

Die **Fig. 4** zeigt eine thermografisch anhand einer Wärmeabklinglänge bestimmte Schmelzbadlänge SBL (nach oben aufgetragen) als Funktion der Zeit (nach rechts aufgetragen), als Kenngröße für die Schmelzbadoszillation bei einem Laserstrahlschweißen (wiederum Werkstoff Stahl Typ 42CrMoS4, Yb-YAG-Laser, EST von 4 mm, und SPP von 16 mm*mrad), mit einem continuous wave (cw) Laser ohne Leistungsmodulation. Bereits mit bloßem Auge ist erkennbar, dass das Schmelzbad mit einer Frequenz von etwas mehr als 3 Hz oszilliert, wobei die Schmelzbadlänge je Modulationsperiode um ca. 2 mm schwankt.

Die Schmelzbadlänge (SBL) wurde hier über die Entfernung zwischen der Vorderseite der Dampfkapillare und dem Schmelzbadende definiert. Das Schmelzbadende wird hier am Ort (bezüglich der Vorschubrichtung des Lasers) desjenigen Wärmestrahlungsintensitätsprofils (senkrecht zur Vorschubrichtung) mit der kleinsten Halbwertsbreite angenommen. Das Minimum der Halbwertsbreite resultiert einerseits aus der spitz zulaufenden Schmelzbadform, und andererseits durch die Entstehung einer breiten Wärmespur hinter dem Schmelzbad. Die Ermittlung der Vorderseite der Dampfkapillare erfolgt über den Intensitätsverlauf entlang der Vorschubrichtung und wird durch den Ort definiert, an welchem die maximal messbare Intensität des Kamerasensors erstmalig erreicht wird.

In **Fig. 5** ist eine Fouriertransformation der Schmelzbadlänge SBL von Fig. 4 dargestellt; nach rechts ist die Frequenz und nach oben die (Fourier-) Amplitude des jeweiligen Frequenzanteils aufgetragen.

Bei ca. 3,6 Hz befindet sich der stärkste Frequenzanteil (Peak), also der Ort im Fourierspektrum mit der größten (Fourier-)Amplitude; bei dieser Frequenz liegt in guter Näherung die (charakteristische) Oszillationsfrequenz des Schmelzbades. Die so bestimmte Frequenz kann als Maßgröße für Frequenz der Schmelzbadoszillation herangezogen werden, und für einen Rückschluss auf die Wahrscheinlichkeit und/oder Häufigkeit des Auftretens von Heißrissen genutzt werden.

Die durchschnittliche Amplitude aller Frequenzanteile beträgt hier ca. 0,3. Hingegen liegt die Amplitude bei der Frequenz der Schmelzbadoszillation (vgl. Peak bei 3,6 Hz) bei ca. 2,4. Damit ergibt sich eine normierte Amplitude, die sich als Quotient von beobachteter Amplitude bei der Schmelzbadoszillationsfrequenz und der durchschnittlichen Amplitude aller Frequenzanteile berechnet, von ca. 8. Diese normierte (Fourier-)Amplitude kann als Maßgröße für die Amplitude der Schmelzbadoszillation herangezogen werden, und wiederum für einen Rückschluss auf die Wahrscheinlichkeit und/oder Häufigkeit des Auftretens von Heißrissen genutzt werden.

Die **Fig. 6** zeigt zusätzlich noch den zeitlichen Verlauf der Laserleistung während des Schweißprozesses von Fig. 4, die konstant bei ca. 1800 W liegt.

Die **Fig. 7** zeigt eine Röntgenaufnahme des geschweißten Werkstücks von Fig. 4. Deutlich sind insgesamt sieben Heißrisse in der Schweißnaht zu sehen.

Die **Fig. 8** zeigt die Schmelzbadlänge SBL (nach oben aufgetragen) als Funktion der Zeit (nach rechts aufgetragen) eines weiteren, analog zum Werkstück von Fig. 4 geschweißten Werkstücks, jedoch geschweißt mit einer sinusförmigen Leistungsmodulation des Lasers, die für eine minimale Schmelzbadoszillation optimiert wurde. Als optimale Fertigungsparamter zeigten sich eine Modulationsfrequenz von 12,8 Hz bei einer absoluten Modulationsamplitude von 1200 W auf der mittleren Laserleistung ($P_{av}$) von 1800 W. Die Laserleistung schwankt somit zwischen $P_{min}$=600 W und $P_{max}$=3000 W (entspricht einer normierten Modulationsamplitude $\Pi$= 1-$P_{min}$/$P_{max}$ von 0,8). Es ist keine merkliche Schmelzbadoszillation mehr erkennbar.

Die **Fig. 9** zeigt noch die Laserleistung (nach oben aufgetragen) beim Laserstrahlschweißen von Fig. 8 als Funktion der Zeit (nach rechts aufgetragen). Der sinusförmige Verlauf, einschließlich $P_{min}$=600 W und $P_{max}$=3000 W, ist gut ersichtlich.

In **Fig. 10** ist eine Röntgenaufnahme des geschweißten Werkstücks von Fig. 8 zu sehen. Es sind keinerlei Heißrisse in der Schweißnaht vorhanden. Gelegentlich treten Poren auf, die jedoch die Festigkeit der Schweißnaht kaum beeinflussen.

Die **Fig. 11** illustriert eine alternative Methode zur Bestimmung einer Maßgröße für die Amplitude der Schmelzbadoszillation. Nach oben aufgetragen ist hier eine Kenngröße für die Schmelzbadoszillation, etwa die Schmelzbadlänge, als Funktion der Zeit, die nach rechts aufgetragen ist. Die Differenz zwischen der oder den höchsten Kenngrößenwerten einerseits und der oder den kleinsten Kenngrößenwerten andererseits der Schweißnaht ist die Spannweite SW der Kenngrößenwerte. Diese kann als Maßgröße für die Amplitude der Schmelzbadoszillation herangezogen werden. In der Praxis kann es noch erforderlich sein, einzelne Messspitzen, die auf Messfehlern beruhen, zu ignorieren; solche Messspitzen können beispielsweise dadurch erkannt werden, dass sie nur bei einem geringen Anteil (beispielsweise weniger als 20%) der Modulationsperioden auftreten.

Die **Fig. 12** zeigt für einen Laserschweißprozess mit konstanter Laserleistung ein Kapillartiefensignal (nach oben aufgetragen) als Funktion der Zeit (nach rechts aufgetragen). Ersichtlich kann eine Prozesseigenfrequenz von ca. 6 Hz aus dem Kapillartiefensignal abgleitet werden; das Kapillartiefensignal kann in so weit als Kenngröße für die Erfindung genutzt werden.

In **Fig. 13** ist das Kapillartiefensignal (nach oben aufgetragen) als Funktion der Zeit (nach rechts aufgetragen) bei einem Schweißprozess mit modulierter Laserleistung, mit Modulationsfrequenz von ca. 5 Hz, gezeigt. Die Modulation wird dem Kapillartiefensignal aufgeprägt, so dass die Schwankungen des Kapillartiefensignals im Wesentlichen der Modulation entsprechen. In diesem Fall sollte eine andere Kenngröße für die Bestimmung der eigentlichen, resonanten Schmelzbadoszillation verwendet werden.

Im Folgenden soll anhand eines fiktiven Beispiels erläutert werden, wie aus den Daten von Schmelzbadoszillationen aus Vorversuchen auf die Wahrscheinlichkeit und die Häufigkeit von Heißrissen in einem Werkstück geschlossen werden kann.

Für einen interessierenden Werkstücktyp werden in Vorversuchen verschiedene Fertigungsparameter oder Fertigungsparameterkombinationen (typischerweise vor allem Modulationsfrequenzen und Modulationsamplituden) des Laserstrahlschweißens jeweils an mehreren (hier jeweils 10) Testwerkstücken ausprobiert, wobei eine Kenngröße für die Schmelzbadoszillation bzw. die zugehörige Maßgröße für die Amplitude und/oder für die Frequenz der Schmelzbadoszillation aufgezeichnet werden. Anschließend werden die Testwerkstücke auf das Vorhandensein von Heißrissen mit herkömmlichen Methoden (etwa die Aufnahme von Röntgenbildern) untersucht.

Dabei ergeben sich folgende Ergebnisse, hier mit einer Schwankungsbreite einer Schmelzbadlänge als Maßgröße für die Amplitude (MGA) der Schmelzbadoszillation :

| Maßgröße Amplitude (MGA) Schmelzbadoszillation | Anzahl Werkstücke ohne Heißrisse | Anzahl Werkstücke mit Heißrissen |
|---|---|---|
| bis 1,0 mm | 10 | 0 |
| 1,1 bis 2,0 mm | 10 | 0 |
| 2,1 bis 2,5 mm | 8 | 2 |
| 2,6 bis 3,0 mm | 3 | 7 |
| 3,1 bis 3,5 mm | 0 | 10 |
| 3,6 mm und größer | 0 | 10 |

Unbeschadet einer genaueren statistischen Auswertung kann aus den Daten folgendes geschlossen werden: Bei MGA bis 2,0 mm sind nirgends Heißrisse in der Schweißnaht beobachtet worden; die Wahrscheinlichkeit für das Auftreten von Heißrissen dürfte in diesem Fall nahe bei 0% liegen. Andererseits sind bei MGA von 3,1 mm oder mehr stets Heißrisse beobachtet worden, so dass die Wahrscheinlichkeit für das Auftreten von Heißrissen hier nahe bei 100 % liegen dürfte. Ein Schwellwert von 2,0 mm für MGA kann daher als eine Art sichere Grenze für rissfreie Werkstücke angesehen werden (Sicherheits-Schwellwert). Andererseits ist bei einem Schwellwert von 3,1 mm eine Grenze überschritten, bei der stets Heißrisse befürchtet werden müssen (Sättigungs-Schwellwert). Für mittlere MGA-Werte zwischen 2,1 mm und 3,0 mm kommen Heißrisse gelegentlich vor; die Wahrscheinlichkeit kann aus den Versuchsergebnissen abgeschätzt werden (hier für MGA von 2,1 bis 2,5 mm ca. 20% heißrissbehaftet, für MGA von 2,6 bis 3,0 mm ca. 80% heißrissbehaftet). Für genaue Wahrscheinlichkeitswerte sollte die Anzahl der Testwerkstücke ausreichend groß sein.

Mit den aus den Testwerkstücken gewonnenen Daten bzw. Wahrscheinlichkeiten und/oder Häufigkeiten kann für Werkstücke, die mit anderen Kombinationen von Fertigungsparametern gefertigt wurden als die Testwerkstücke, aber ähnliche Maßgrößen für die Amplitude und/oder die Frequenz des Schmelzbades (hier MGA-Werte) ergaben, die Qualität der Schweißnaht abgeschätzt werden, ohne dass diese mit herkömmlichen Methoden (etwa die Aufnahme von Röntgenbildern) untersucht werden müsste. Beispielsweise kann bei einem zu beurteilenden Werkstück, das ein MGA von 1,4 mm hat, angenommen werden, dass es keine Heißrisse aufweisen wird. Ebenso kann bei einem Werkstück, das ein MGA von 3,4 mm hat, angenommen werden, dass es Heißrisse aufweisen wird.

Betreffend die Häufigkeit von Heißrissen ist die einfachste Information die Anzahl der Heißrisse je Werkstücklänge. Diese Häufigkeit korreliert in der Regel näherungsweise direkt proportional mit der Oszillationsfrequenz des Schmelzbads, da bei jedem Oszillationsdurchgang ein Heißriss infolge der ablaufenden Erstarrungsprozesse auftreten kann. Daher ist es oftmals günstig, die Oszillationsfrequenz des Schmelzbades zu minimieren, soweit dies durch geeignete Fertigungsparameter möglich ist. Man beachte jedoch, dass bei einer Wahrscheinlichkeit für das Auftreten von Heißrissen von nahe 0% die Häufigkeit in der Regel irrelevant ist.

Eine kombinierte Information über Wahrscheinlichkeit und Häufigkeit von Heißrissen kann aus der relativen Risslänge in einer Schweißnaht, das ist der rissbehaftete Anteil an der Gesamtlänge einer Schweißnaht, gewonnen werden. Die relative Risslänge wird typischerweise in einer Matrix aus der Maßgröße für die Amplitude und der Maßgröße für die Frequenz der Schmelzbadoszillation eingetragen.

In der Regel ist vor allem die Kenntnis von Sicherheits-Schwellwerten (insbesondere für die Maßgröße der Amplitude der Schmelzbadschwingung, aber auch für die Maßgröße der Frequenz der Schmelzbadschwingung, oder entsprechende Kombinationen) relevant, um rissfreie Werkstücke herzustellen.

Wenn ein Fertigungsprozess eines Werkstücks optimiert werden soll, können die Fertigungsparameter von Werkstück zu Werkstück verändert werden und anhand der bei der Fertigung beobachteten Schmelzbadoszillation erfindungsgemäß überprüft werden, wie sich die Rissneigung verändert. In der Regel wird dabei auf eine Minimierung der Maßgröße für die Amplitude der Schmelzbadoszillation optimiert.

Im Rahmen der Erfindung ist es auch denkbar, den Schweißprozess während des Laserschweißens eines Werkstücks erfindungsgemäß zu regeln, insbesondere wobei die Maßgröße für die Amplitude des Schmelzbades minimiert wird. Dies kann bei schnell veränderlichen äußeren Faktoren, wie einer von Werkstück zu Werkstück oder im Werkstück schwankenden Materialzusammensetzung, zu einer Verbesserung der Schweißnahtqualität führen. Man beachte, dass für dieses Vorgehen typischerweise die Rissneigung jeweils für einen zuletzt gefertigten Schweißnahtabschnitt (und nicht die gesamte bisher gefertigte Schweißnaht) überprüft wird.

## Patentansprüche

1. Verfahren zur Bestimmung der Qualität einer Schweißnaht (5) eines mittels Laserstrahlschweißen entlang der Schweißnaht (5) geschweißten Werkstücks (1),
wobei während des Laserstrahlschweißens zumindest ein Teilbereich eines Schmelzbades (4) und/oder einer Umgebung des Schmelzbades (4) mit einem Messsystem (8) beobachtet wird,
und anhand des Beobachtungsergebnisses die Qualität der Schweißnaht (5) des geschweißten Werkstücks (1) bestimmt wird,
**dadurch gekennzeichnet,**
**dass** während des Laserstrahlschweißens wenigstens eine Kenngröße, die mit einer Schmelzbadoszillation des Schmelzbades (4) korreliert, beobachtet wird, und aus dem beobachteten zeitlichen Verlauf der Kenngröße eine Maßgröße für eine Amplitude der Schmelzbadoszillation und/oder eine Maßgröße für eine Frequenz der Schmelzbadoszillation ermittelt wird,
und **dass** aus der Maßgröße für die Amplitude der Schmelzbadoszillation und/oder der Maßgröße für die Frequenz der Schmelzbadoszillation auf eine Wahrscheinlichkeit und/oder eine Häufigkeit für das Auftreten von Heißrissen (11) an der Schweißnaht (5) des Werkstücks (1) geschlossen wird.

2. Verfahren nach Anspruch 1, **dadurch gekennzeichnet, dass** für die Bestimmung der Wahrscheinlichkeit und/oder Häufigkeit für das Auftreten von Heißrissen (11) die Maßgröße für die Amplitude der Schmelzbadoszillation mit wenigstens einem Schwellenwert verglichen wird,
insbesondere wobei bei einer Maßgröße für die Amplitude der Schmelzbadoszillation oberhalb eines Sättigungs-Schwellenwerts angenommen wird, dass stets ein Heißriss (11) im Werkstück (1) je Amplitudenmaximum auftritt.

3. Verfahren nach einem der vorhergehenden Ansprüche, **dadurch gekennzeichnet, dass** das Laserstrahlschweißen mit einer Laserleistung erfolgt, die mit einer Modulationsfrequenz f und einer Modulationsamplitude $\Pi$ moduliert ist,
mit $\Pi = 1 - \frac{P\min}{P\max}$, mit $P_{min}$: minimale Laserleistung während einer Modulationsperiode, und $P_{max}$: maximale Laserleitung während einer Modulationsperiode.

4. Verfahren nach Anspruch 3, **dadurch gekennzeichnet, dass** die Laserleistung näherungsweise sinusförmig moduliert wird, insbesondere wobei die Sinusform durch wenigstens 12, bevorzugt wenigstens 18, Stützpunkte je Modulationsperiode angenähert ist.

5. Verfahren nach einem der vorhergehenden Ansprüche, **dadurch gekennzeichnet, dass** Werkstück (1) aus Stahl besteht.

6. Verfahren nach einem der vorhergehenden Ansprüche, **dadurch gekennzeichnet, dass** die wenigstens eine Kenngröße eine geometrische Größe des Schmelzbades (4) umfasst,
insbesondere wobei diese geometrische Größe des Schmelzbades (4) mit einer Kamera erfasst wird.

7. Verfahren nach Anspruch 6, **dadurch gekennzeichnet, dass** die geometrische Größe eine Schmelzbadlänge (SL) oder eine Schmelzbadbreite (SB) oder eine Schmelzbadfläche ist.

8. Verfahren nach einem der vorhergehenden Ansprüche, **dadurch gekennzeichnet, dass** die wenigstens eine Kenngröße eine lokale Temperatur im Schmelzbad (4) oder in einer Wärmespur des Schmelzbades (4) an einem Ort (9, 10) auf dem Werkstück (1), der fest zu einem Laserstrahl-Brennfleck (6) positioniert und beabstandet ist, umfasst, insbesondere wobei die lokale Temperatur mit einem Pyrometer oder einer Wärmebildkamera erfasst wird.

9. Verfahren nach einem der vorhergehenden Ansprüche, **dadurch gekennzeichnet, dass** die Kenngröße eine geometrische Größe einer Schweißkapillare (3) über einem Laserstrahl-Brennfleck (6) umfasst, insbesondere wobei die geometrische Größe der Schweißkapillare (3) mit einem Messstrahl und einem Weißlichtinterferometer bestimmt wird.

10. Verfahren nach einem der vorhergehenden Ansprüche, **dadurch gekennzeichnet, dass** der beobachtete zeitliche Verlauf der Kenngröße einer Fourier-Transformation unterzogen wird.

11. Verfahren zur Optimierung eines oder mehrerer Fertigungsparameter von geschweißten Werkstücken (1),
wobei eine Vielzahl von Werkstücken (1) mittels Laserstrahlschweißen entlang einer Schweißnaht (5) geschweißt werden,
wobei die Werkstücke (1) jeweils mit unterschiedlichen Werten eines Fertigungsparameters oder Wertekombinationen mehrerer Fertigungsparameter gefertigt werden,
wobei für die Werkstücke (1) jeweils die Wahrscheinlichkeit und/oder die Häufigkeit für das Auftreten von Heißrissen (11) an der Schweißnaht (5) mit einem Verfahren nach einem der Ansprüche 1 bis 10 bestimmt wird,
wobei wenigstens ein bestes Werkstück (1) aus der Vielzahl von Werkstücken (1) ermittelt wird, mit dessen Wert oder Wertkombination des oder der Fertigungsparameter eine kleinste Wahrscheinlichkeit und/oder eine kleinste Häufigkeit für das Auftreten von Heißrissen (11) in der Schweißnaht (5) erhalten wurde,
und wobei der Wert oder die Wertekombination des besten Werkstücks (1) als Basis für eine Bestimmung der optimalen Fertigungsparameter herangezogen wird.

12. Verfahren nach Anspruch 11, **dadurch gekennzeichnet,**
**dass** das Laserstrahlschweißen eines jeweiligen Werkstücks (1) mit einer Laserleistung erfolgt, die mit einer Modulationsfrequenz f und einer Modulationsamplitude $\Pi$ moduliert ist, mit $\Pi = 1 - \frac{P\min}{P\max}$,
mit $P_{min}$: minimale Laserleistung während einer Modulationsperiode, und $P_{max}$: maximale Laserleitung während einer Modulationsperiode, und dass bei den jeweiligen Werkstücken (1) unterschiedliche Wertekombinationen von Modulationsfrequenz f und Modulationsamplitude $\Pi$ als Fertigungsparameter angewandt werden.

13. Verfahren nach Anspruch 11 oder 12, **dadurch gekennzeichnet, dass** das beste Werkstück (1) ermittelt wird, indem das Werkstück (1) mit der kleinsten Maßgröße für die Amplitude der Schmelzbadoszillation aller Werkstücke (1) ausgewählt wird.

14. Verfahren zur Regelung eines oder mehrerer Fertigungsparameter
während des Laserstrahlschweißens eines Werkstücks (1),
wobei das Werkstück (1) mittels Laserstrahlschweißen entlang einer Schweißnaht (5) geschweißt wird,
wobei das Laserstrahlschweißen in Abhängigkeit von einem oder mehreren Fertigungsparametern erfolgt,
wobei die Wahrscheinlichkeit und/oder die Häufigkeit für das Auftreten von Heißrissen (11) an der Schweißnaht (5) mit einem Verfahren nach einem der Ansprüche 1 bis 10 während des Laserstrahlschweißens des Werkstücks (1) wiederholt bestimmt wird,
und wobei der Wert des Fertigungsparameters oder die Werte der Fertigungsparameter während des Laserstrahlschweißens des Werkstücks (1) derart nachgeregelt werden, dass die Wahrscheinlichkeit und/oder die Häufigkeit für das Auftreten von Heißrissen (11) an der Schweißnaht (5) minimiert sind.

15. Verfahren nach Anspruch 14, **dadurch gekennzeichnet,**
**dass** das Laserstrahlschweißen des Werkstücks (1) mit einer Laserleistung erfolgt, die mit einer Modulationsfrequenz f und einer Modulationsamplitude Π moduliert ist, mit $\Pi = 1 - \frac{P\min}{P\max}$, mit $P_{min}$: minimale Laserleistung während einer Modulationsperiode, und $P_{max}$: maximale Laserleitung während einer Modulationsperiode, und **dass** der Wert der Modulationsfrequenz f und/oder der Wert der Modulationsamplitude Π als Fertigungsparameter während des Laserstrahlschweißens des Werkstücks (1) derart nachgeregelt werden, dass die Wahrscheinlichkeit und/oder die Häufigkeit für das Auftreten von Heißrissen (11) an der Schweißnaht (5) minimiert sind.

**16.** Verfahren nach Anspruch 15, **dadurch gekennzeichnet, dass** für das wiederholte Bestimmen der Wahrscheinlichkeit und/oder der Häufigkeit für das Auftreten von Heißrissen (11) an der Schweißnaht (5) lediglich der zeitliche Verlauf der Kenngröße seit einer letzten Nachregelung berücksichtigt wird, wobei zwischen zwei Nachregelungen wenigstens fünf Modulationsperioden der Modulation der Laserleistung stattfinden.

**17.** Verfahren nach Anspruch 15 oder 16, **dadurch gekennzeichnet, dass** die Wahrscheinlichkeit und/oder die Häufigkeit für das Auftreten von Heißrissen (11) an der Schweißnaht (5) dadurch minimiert sind, dass der Wert des Fertigungsparameters oder die Werte der Fertigungsparameter so nachgeregelt werden, dass die Maßgröße für die Amplitude der Schmelzbadoszillation minimiert ist.

## Claims

**1.** Method for determining the quality of a weld seam (5) of a workpiece (1) which is welded by means of laser beam welding along the weld seam (5),
wherein during the laser beam welding operation at least a part-region of a molten bath (4) and/or an environment of the molten bath (4) is monitored with a measuring system (8),
and the quality of the weld seam (5) of the welded workpiece (1) is determined with reference to the monitoring result, **characterised in that**,
during the laser beam welding operation, at least one parameter which correlates to a molten bath oscillation of the molten bath (4) is monitored and, from the monitored time progression of the parameter, a measurement variable for an amplitude of the molten bath oscillation and/or a measurement variable for a frequency of the molten bath oscillation is/are established,
and **in that** from the measurement variable for the amplitude of the molten bath oscillation and/or the measurement variable for the frequency of the molten bath oscillation conclusions are drawn relating to a probability and/or a frequency of occurrence for the appearance of hot cracks (11) in the weld seam (5) of the workpiece (1).

**2.** Method according to claim 1, **characterised in that**, for determining the probability and/or frequency of occurrence for the appearance of hot cracks (11), the measurement variable for the amplitude of the molten bath oscillation is compared with at least one threshold value,
in particular wherein, with a measurement variable for the amplitude of the molten bath oscillation above a saturation threshold value, it is assumed that a hot crack (11) always occurs in the workpiece (1) per amplitude maximum.

**3.** Method according to either of the preceding claims, **characterised in that** the laser beam welding is carried out at a laser power which is modulated at a modulation frequency f and a modulation amplitude π, with

$$\Pi = 1 - \frac{P\min}{P\max}$$

, with $P_{min}$: minimum laser power during a modulation period and $P_{max}$: maximum laser power during a modulation period.

**4.** Method according to claim 3, **characterised in that** the laser power is modulated in an approximately sinusoidal manner, in particular wherein the sinus form is approximated by means of at least 12, preferably at least 18, base points per modulation period.

**5.** Method according to any one of the preceding claims, **characterised in that** the workpiece (1) consists of steel.

**6.** Method according to any one of the preceding claims, **characterised in that** the at least one parameter comprises a geometric size of the molten bath (4),
in particular wherein this geometric size of the molten bath (4) is detected with a camera.

**7.** Method according to claim 6, **characterised in that** the geometric size is a molten bath length (SL) or a molten bath width (SB) or a molten bath surface-area.

**8.** Method according to any one of the preceding claims, **characterised in that** the at least one parameter comprises a local temperature in the molten bath (4) or in a heat track of the molten bath (4) at a location (9, 10) on the workpiece (1) which is fixedly positioned and spaced apart with respect to a laser beam focal spot (6),
in particular wherein the local temperature is detected by means of a pyrometer or a thermal imaging camera.

**9.** Method according to any one of the preceding claims, **characterised in that** the parameter comprises a geometric size of a weld capillary (3) over a laser beam focal spot (6),
in particular wherein the geometric size of the weld capillary (3) is determined using a measurement beam and a white light interferometer.

**10.** Method according to any one of the preceding claims, **characterised in that** the monitored time progression of the parameter is subjected to a Fourier transformation.

**11.** Method for optimising one or more production parameters of welded workpieces (1),
wherein a plurality of workpieces (1) are welded along a weld seam (5) by means of laser beam welding,
wherein the workpieces (1) are each produced with different values of a production parameter or value combinations of a plurality of production parameters,
wherein for the workpieces (1) in each case the probability and/or the frequency of occurrence for the appearance of hot cracks (11) in the weld seam (5) is determined with a method in accordance with any one of claims 1 to 10,
wherein at least one best workpiece (1) from the plurality of workpieces (1) is established, by means of whose value or value combination of the production parameter(s) a lowest probability and/or a lowest frequency of occurrence for the appearance of hot cracks (11) in the weld seam (5) was obtained,
and wherein the value or the value combination of the best workpiece (1) is used as a basis for determining the optimum production parameters.

**12.** Method according to claim 11, **characterised in that** the laser beam welding of a respective workpiece (1) is carried out at a laser power which is modulated at a modulation frequency f and a modulation amplitude $\pi$, with

$$\Pi = 1 - \frac{P\min}{P\max}$$

, with $P_{min}$: minimum laser power during a modulation period and $P_{max}$: maximum laser power during a modulation period,
and **in that**, with the respective workpieces (1), different value combinations of modulation frequency f and modulation amplitude $\pi$ are used as production parameters.

**13.** Method according to claim 11 or 12, **characterised in that** the best workpiece (1) is established by the workpiece (1) with the smallest measurement variable for the amplitude of the molten bath oscillation of all workpieces (1) being selected.

**14.** Method for controlling one or more production parameters during the laser beam welding of a workpiece (1),
wherein the workpiece (1) is welded along a weld seam (5) by means of laser beam welding,
wherein the laser beam welding is carried out in accordance with one or more production parameters,
wherein the probability and/or the frequency of occurrence for the appearance of hot cracks (11) in the weld seam (5) is repeatedly determined with a method in accordance with any one of claims 1 to 10 during the laser beam welding of the workpiece (1),
and wherein the value of the production parameter or the values of the production parameters is/are re-adjusted during the laser beam welding of the workpiece (1) in such a manner that the probability and/or the frequency of occurrence for the appearance of hot cracks (11) in the weld seam (5) is/are minimised.

**15.** Method according to claim 14, **characterised in that** the laser beam welding of the workpiece (1) is carried out at a laser power which is modulated at a modulation frequency f and a modulation amplitude $\pi$, with

$$\Pi = 1 - \frac{P\min}{P\max}$$

, with $P_{min}$: minimum laser power during a modulation period and $P_{max}$: maximum laser power during a modulation period,
and **in that** the value of the modulation frequency f and/or the value of the modulation amplitude $\pi$ is/are re-adjusted as production parameters during the laser beam welding of the workpiece (1) in such a manner that the probability and/or the frequency of occurrence for the appearance of hot cracks (11) in the weld seam (5) is/are minimised.

**16.** Method according to claim 15, **characterised in that** for the repeated determination of the probability and/or the frequency of occurrence for the appearance of hot cracks (11) in the weld seam (5) only the time progression of the parameter since a last re-adjustment is taken into account, wherein between two re-adjustments at least five modulation periods of the modulation of the laser power take place.

**17.** Method according to claim 15 or 16, **characterised in that** the probability and/or the frequency of occurrence for the appearance of hot cracks (11) in the weld seam (5) are minimised by the value of the production parameter or the values of the production parameters being re-adjusted in such a manner that the measurement variable for the amplitude of the molten bath oscillation is minimised.

**Revendications**

**1.** Procédé pour déterminer la qualité d'un cordon de soudure (5) d'une pièce (1) soudée le long du cordon de soudure (5) au moyen d'un soudage par faisceau laser, dans lequel, pendant le soudage par faisceau laser, au moins une zone partielle d'un bain de fusion (4) et/ou d'un environnement du bain de fusion (4) est observée avec un système de mesure (8),
et la qualité du cordon de soudure (5) de la pièce soudée (1) est déterminée à l'aide du résultat d'observation,
**caractérisé en ce**
**qu'**au moins une grandeur caractéristique qui est corrélée avec une oscillation du bain de fusion (4) est observée pendant le soudage au faisceau laser, et une grandeur mesurée d'une amplitude de l'oscillation du bain de fusion et/ou une grandeur mesurée d'une fréquence de l'oscillation du bain de fusion est déterminée à partir de la variation dans le temps observée de la grandeur caractéristique,
et **qu'**une probabilité et/ou une fréquence d'apparition de fissures à chaud (11) sur le cordon de soudure (5) de la pièce (1) sont déduites de la grandeur mesurée de l'amplitude de l'oscillation du bain de fusion et/ou de la grandeur mesurée de la fréquence de l'oscillation du bain de fusion.

**2.** Procédé selon la revendication 1, **caractérisé en ce que**, pour déterminer la probabilité et/ou la fréquence de l'apparition de fissures à chaud (11), la grandeur mesurée de l'amplitude de l'oscillation du bain de fusion est comparée à au moins une valeur seuil,
en particulier dans lequel, lorsqu'une grandeur mesurée de l'amplitude de l'oscillation du bain de fusion est supérieure à une valeur seuil de saturation, il est supposé qu'une fissure à chaud (11) se produit toujours dans la pièce (1) à chaque maximum d'amplitude.

**3.** Procédé selon l'une des revendications précédentes, **caractérisé en ce que** le soudage par faisceau laser est effectué à une puissance laser qui est modulée avec une fréquence de modulation f et une amplitude de modulation II,
avec $\Pi = 1 - \frac{P_{min}}{P_{max}}$, où $P_{min}$ : puissance laser minimale pendant une période de modulation, et $P_{max}$ : puissance laser maximale pendant une période de modulation.

**4.** Procédé selon la revendication 3, **caractérisé en ce que** la puissance laser est modulée de manière approximativement sinusoïdale, en particulier dans lequel la forme sinusoïdale est approchée par au moins 12, de préférence au moins 18, points de repère par période de modulation.

**5.** Procédé selon l'une des revendications précédentes, **caractérisé en ce que** la pièce (1) est constituée d'acier.

6. Procédé selon l'une des revendications précédentes, **caractérisé en ce que** ladite au moins une grandeur caractéristique comprend une grandeur géométrique du bain de fusion (4),
en particulier dans lequel cette grandeur géométrique du bain de fusion (4) est détectée par une caméra.

7. Procédé selon la revendication 6, **caractérisé en ce que** la grandeur géométrique est une longueur de bain de fusion (SL), une largeur de bain de fusion (SB) ou une surface de bain de fusion.

8. Procédé selon l'une des revendications précédentes, **caractérisé en ce que** ladite au moins une grandeur caractéristique comprend une température locale dans le bain de fusion (4) ou dans une trace de chaleur du bain de fusion (4) à un endroit (9, 10) sur la pièce (1) qui est positionné de manière fixe par rapport à un foyer de faisceau laser (6) et espacé de ce dernier,
en particulier dans lequel la température locale est détectée avec un pyromètre ou une caméra thermique.

9. Procédé selon l'une des revendications précédentes, **caractérisé en ce que** la grandeur caractéristique comprend une grandeur géométrique d'un capillaire de soudage (3) au-dessus d'un foyer de faisceau laser (6), en particulier dans lequel la grandeur géométrique du capillaire de soudage (3) est déterminée avec un faisceau de mesure et un interféromètre en lumière blanche.

10. Procédé selon l'une des revendications précédentes, **caractérisé en ce que** la variation dans le temps observée de la grandeur caractéristique est soumise à une transformation de Fourier.

11. Procédé pour optimiser un ou plusieurs paramètres de fabrication de pièces soudées (1),
dans lequel une pluralité de pièces (1) sont soudées le long d'un cordon de soudure (5) au moyen d'un soudage par faisceau laser,
dans lequel les pièces (1) sont fabriquées chaque fois avec des valeurs différentes d'un paramètre de fabrication ou des combinaisons de valeurs de plusieurs paramètres de fabrication,
dans lequel la probabilité et/ou la fréquence d'apparition de fissures à chaud (11) sur le cordon de soudure (5) sont déterminées pour les pièces (1) par un procédé selon l'une des revendications 1 à 10,
dans lequel, parmi la pluralité de pièces (1), on détermine au moins une meilleure pièce (1) avec la valeur ou la combinaison de valeurs du ou des paramètres de fabrication de laquelle on a obtenu la probabilité la plus faible et/ou la fréquence la plus faible d'apparition de fissures à chaud (11) dans le cordon de soudure (5),
et dans lequel la valeur ou la combinaison de valeurs de la meilleure pièce (1) est prise comme base pour déterminer les paramètres de fabrication optimaux.

12. Procédé selon la revendication 11, **caractérisé en ce que** le soudage par faisceau laser d'une pièce respective (1) est effectué à une puissance laser qui est modulée avec une fréquence de modulation f et une amplitude de modulation II, avec $\Pi = 1 - \frac{P_{min}}{P_{max}}$, où $P_{min}$ : puissance laser minimale pendant une période de modulation, et $P_{max}$ : puissance laser maximale pendant une période de modulation,
et **que** différentes combinaisons de valeurs de la fréquence de modulation f et de l'amplitude de modulation $\Pi$ sont utilisées comme paramètres de fabrication pour les pièces respectives (1).

13. Procédé selon la revendication 11 ou 12, **caractérisé en ce que** la meilleure pièce (1) est déterminée en sélectionnant la pièce (1) ayant la plus petite grandeur mesurée de l'amplitude de l'oscillation du bain de fusion de toutes les pièces (1).

14. Procédé pour réguler un ou plusieurs paramètres de fabrication pendant le soudage par faisceau laser d'une pièce (1),
dans lequel la pièce (1) est soudée le long d'un cordon de soudure (5) au moyen d'un soudage par faisceau laser,
dans lequel le soudage par faisceau laser est effectué en fonction d'un ou plusieurs paramètres de fabrication,
dans lequel la probabilité et/ou la fréquence d'apparition de fissures à chaud (11) sur le cordon de soudure (5) sont déterminées de manière répétée par un procédé selon l'une des revendications 1 à 10 pendant le soudage par faisceau laser de la pièce (1),
et dans lequel la valeur du paramètre de fabrication ou les valeurs des paramètres de fabrication sont réajustées pendant le soudage par faisceau laser de la pièce (1) de telle sorte que la probabilité et/ou la fréquence d'apparition de fissures à chaud (11) sur le cordon de soudure (5) soient minimisées.

**15.** Procédé selon la revendication 14, **caractérisé en ce que** le soudage par faisceau laser de la pièce (1) est effectué à une puissance laser qui est modulée avec une fréquence de modulation f et une amplitude de modulation $\Pi$, avec $\Pi = 1 - \frac{P_{min}}{P_{max}}$, où $P_{min}$ : puissance laser minimale pendant une période de modulation, et $P_{max}$ : puissance laser maximale pendant une période de modulation,
et **que** la valeur de la fréquence de modulation f et/ou la valeur de l'amplitude de modulation $\Pi$ en tant que paramètres de fabrication sont réajustées pendant le soudage par faisceau laser de la pièce (1) de telle sorte que la probabilité et/ou la fréquence d'apparition de fissures à chaud (11) sur le cordon de soudure (5) soient minimisées.

**16.** Procédé selon la revendication 15, **caractérisé en ce que** pour la détermination répétée de la probabilité et/ou de la fréquence d'apparition de fissures à chaud (11) sur le cordon de soudure (5), on ne prend en compte que la variation dans le temps de la grandeur caractéristique depuis un dernier réajustement, au moins cinq périodes de modulation de la modulation de la puissance laser ayant lieu entre deux réajustements.

**17.** Procédé selon la revendication 15 ou 16, **caractérisé en ce que** la probabilité et/ou la fréquence d'apparition de fissures à chaud (11) sur le cordon de soudure (5) sont minimisées en réajustant la valeur du paramètre de fabrication ou les valeurs des paramètres de fabrication de telle sorte que la grandeur mesurée de l'amplitude de l'oscillation du bain de fusion soit minimisée.

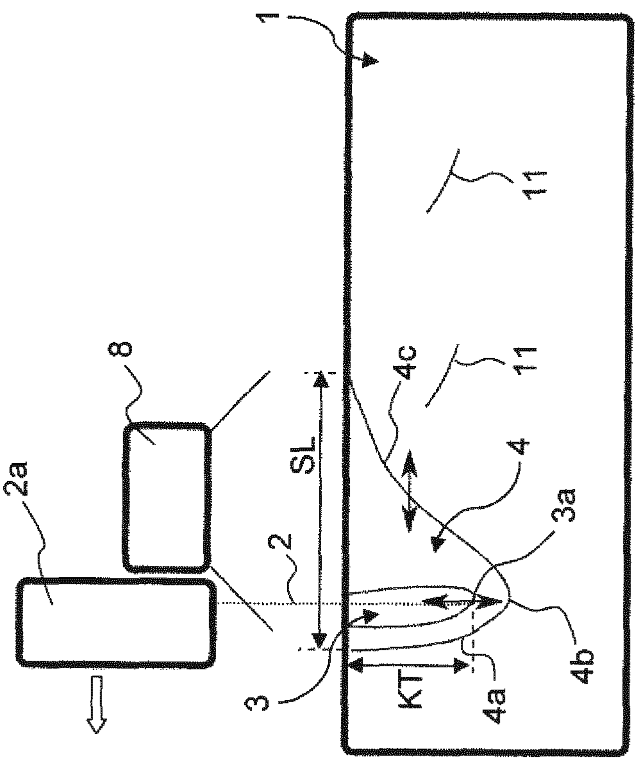


Fig. 1

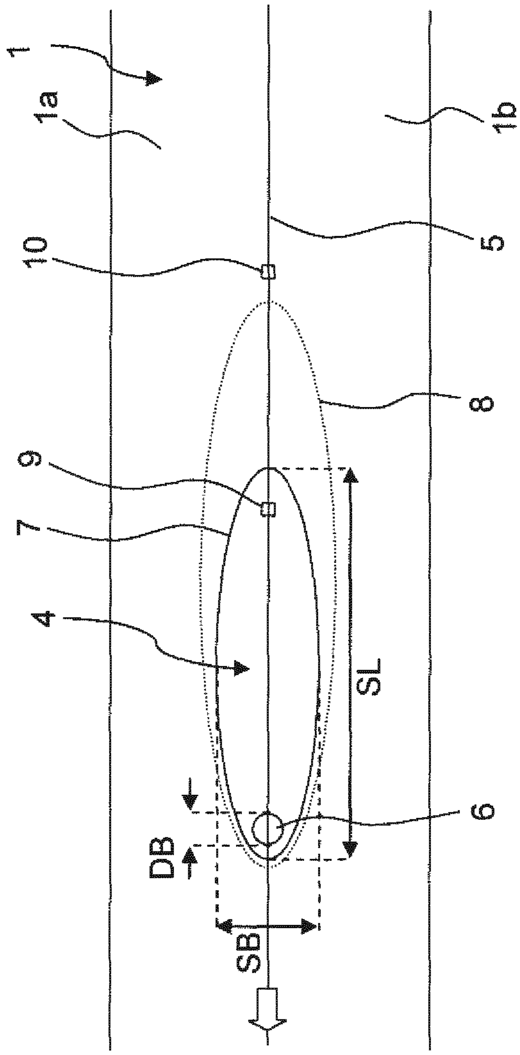


Fig. 2

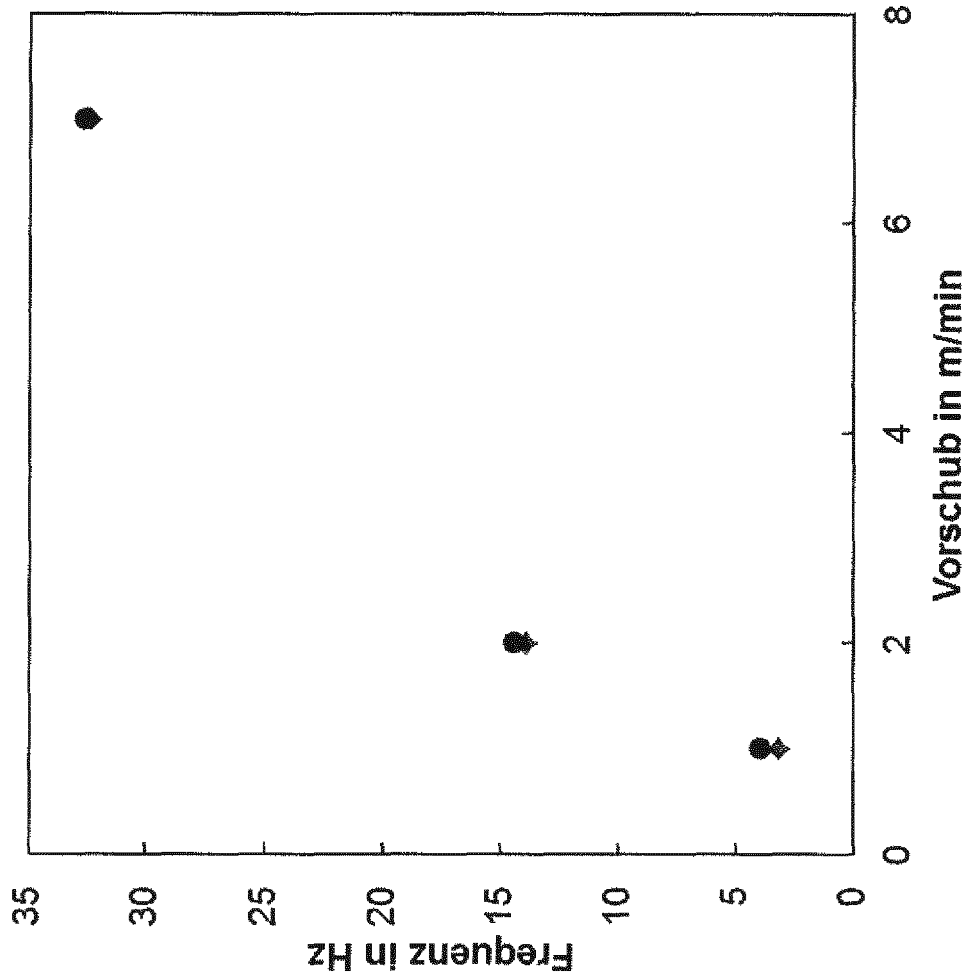


Fig. 3

Fig. 4

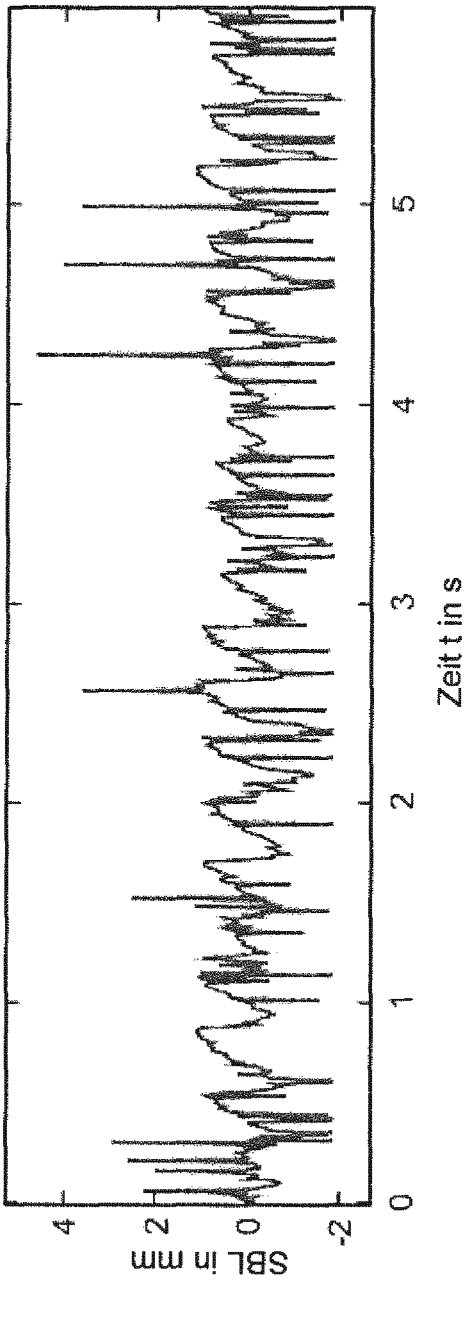
SBL in mm
4
2
0
-2
Zeit t in s
0
1
2
3
4
5

Fig. 5

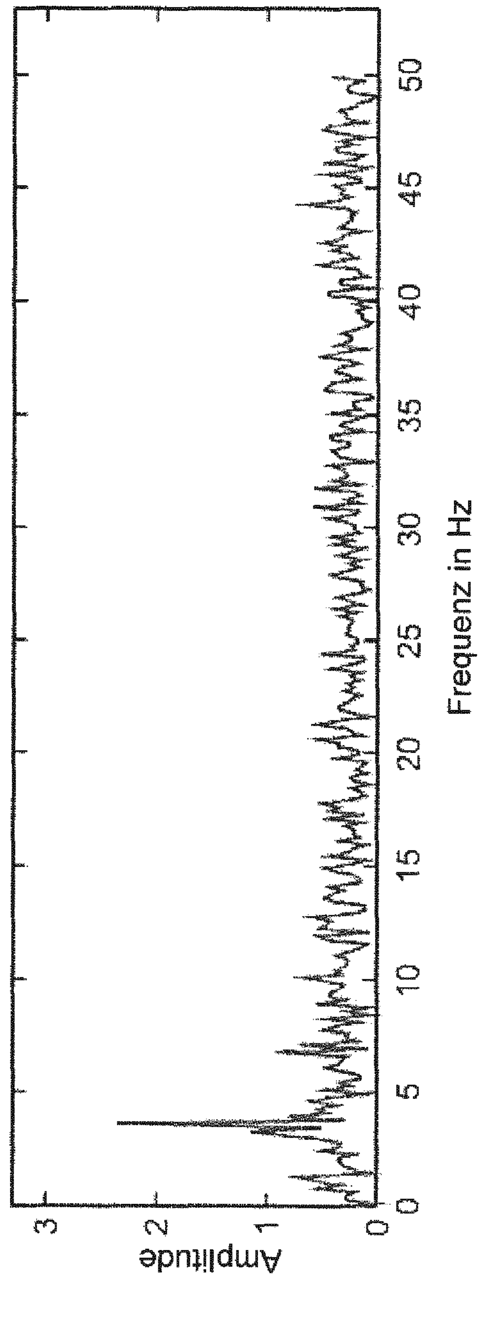
Amplitude
3
2
1
0
Frequenz in Hz
0
5
10
15
20
25
30
35
40
45
50

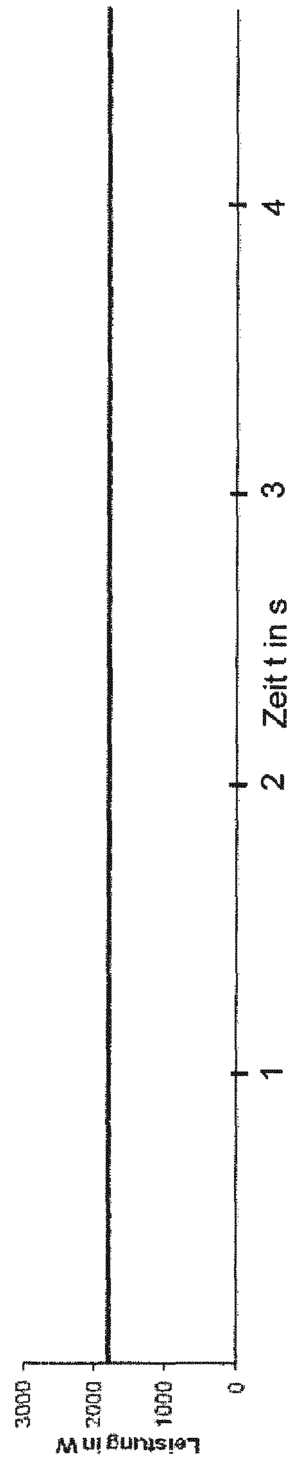


Fig. 6

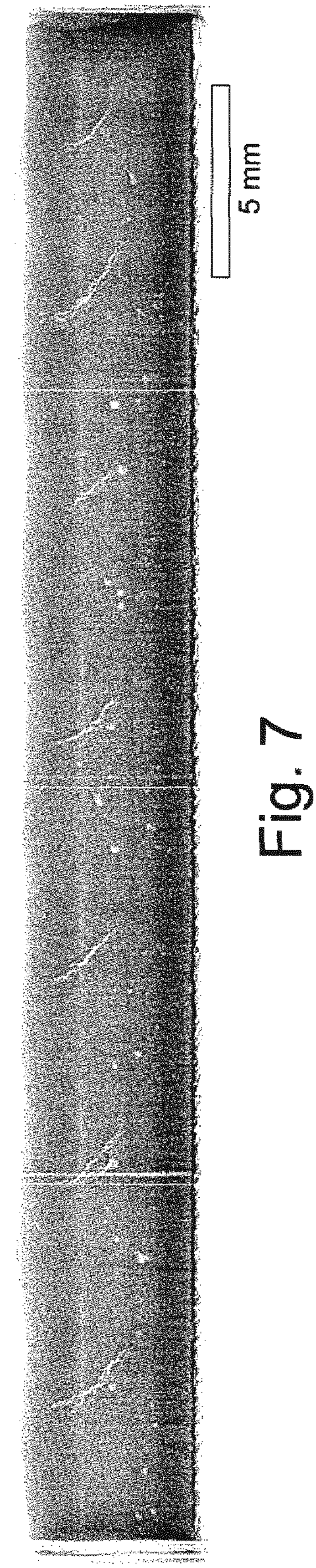


Fig. 7

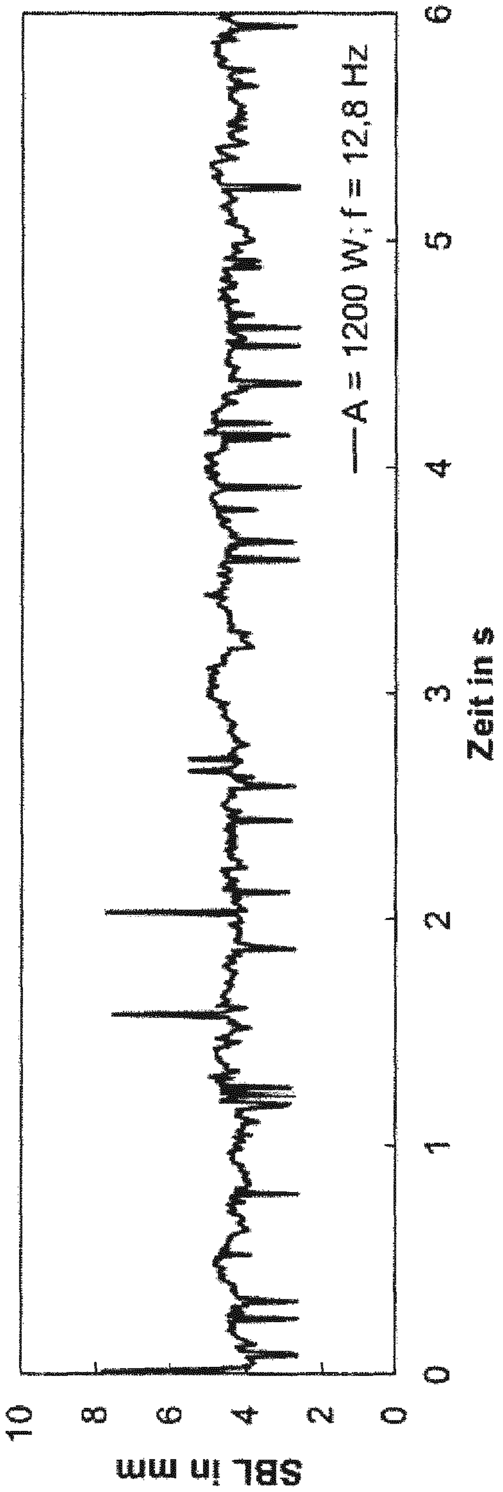
SBL in mm
0
2
4
6
8
10
Zeit in s
0
1
2
3
4
5
6
—A = 1200 W; f = 12,8 Hz

Fig. 8

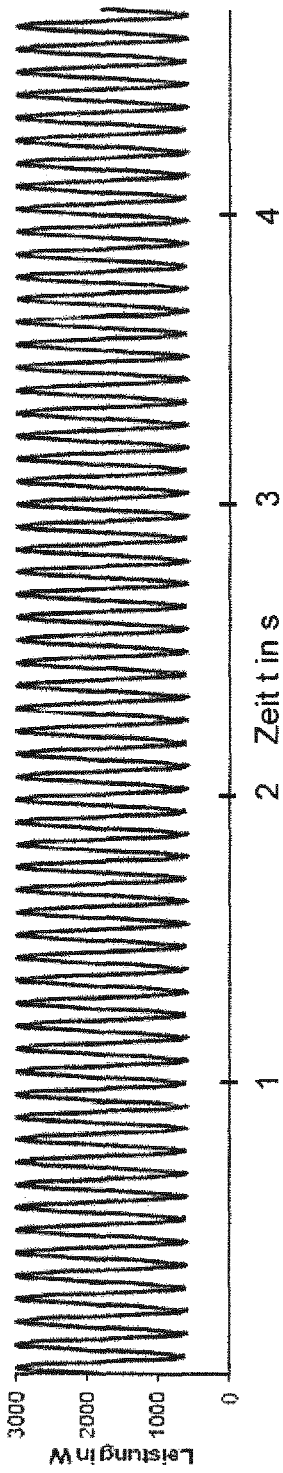
Leistung in W
0
1000
2000
3000
Zeit t in s
1
2
3
4

Fig. 9

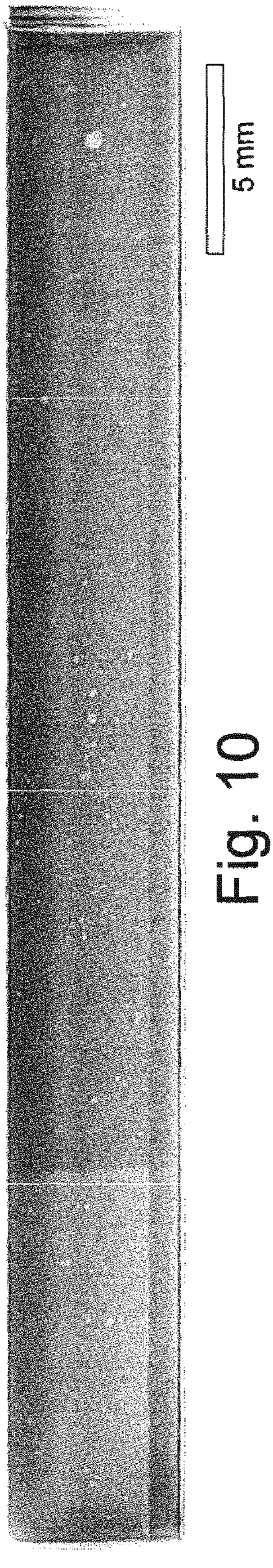


Fig. 10

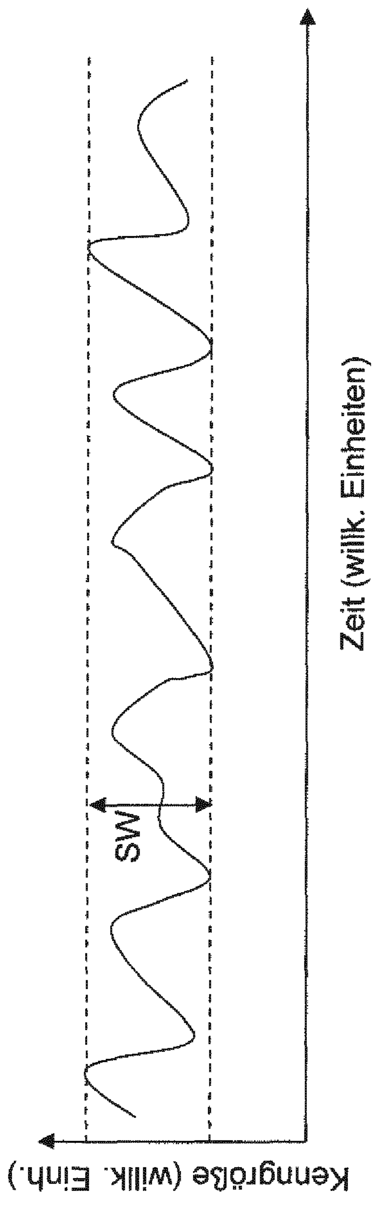


Fig. 11

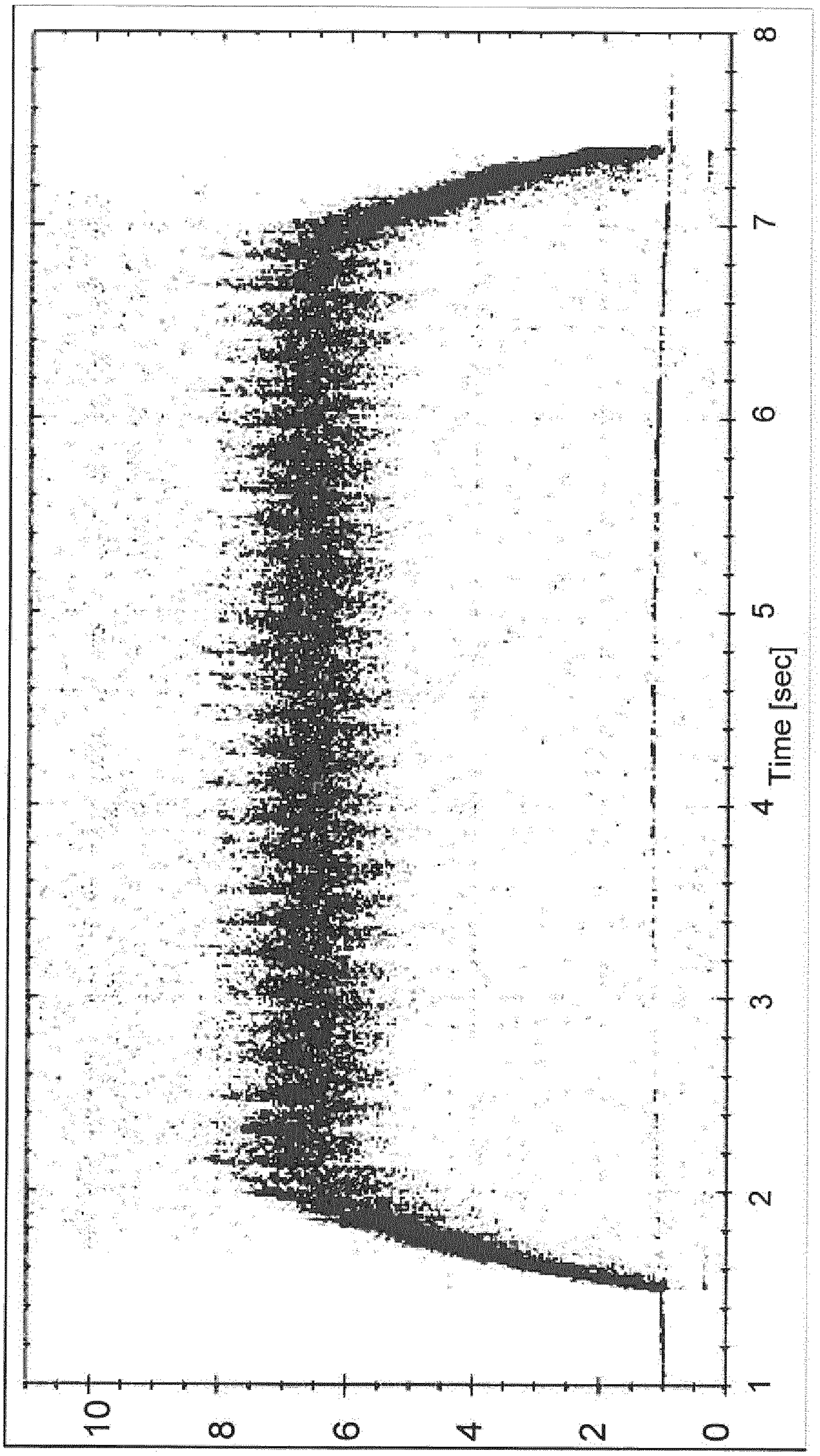


Fig. 12

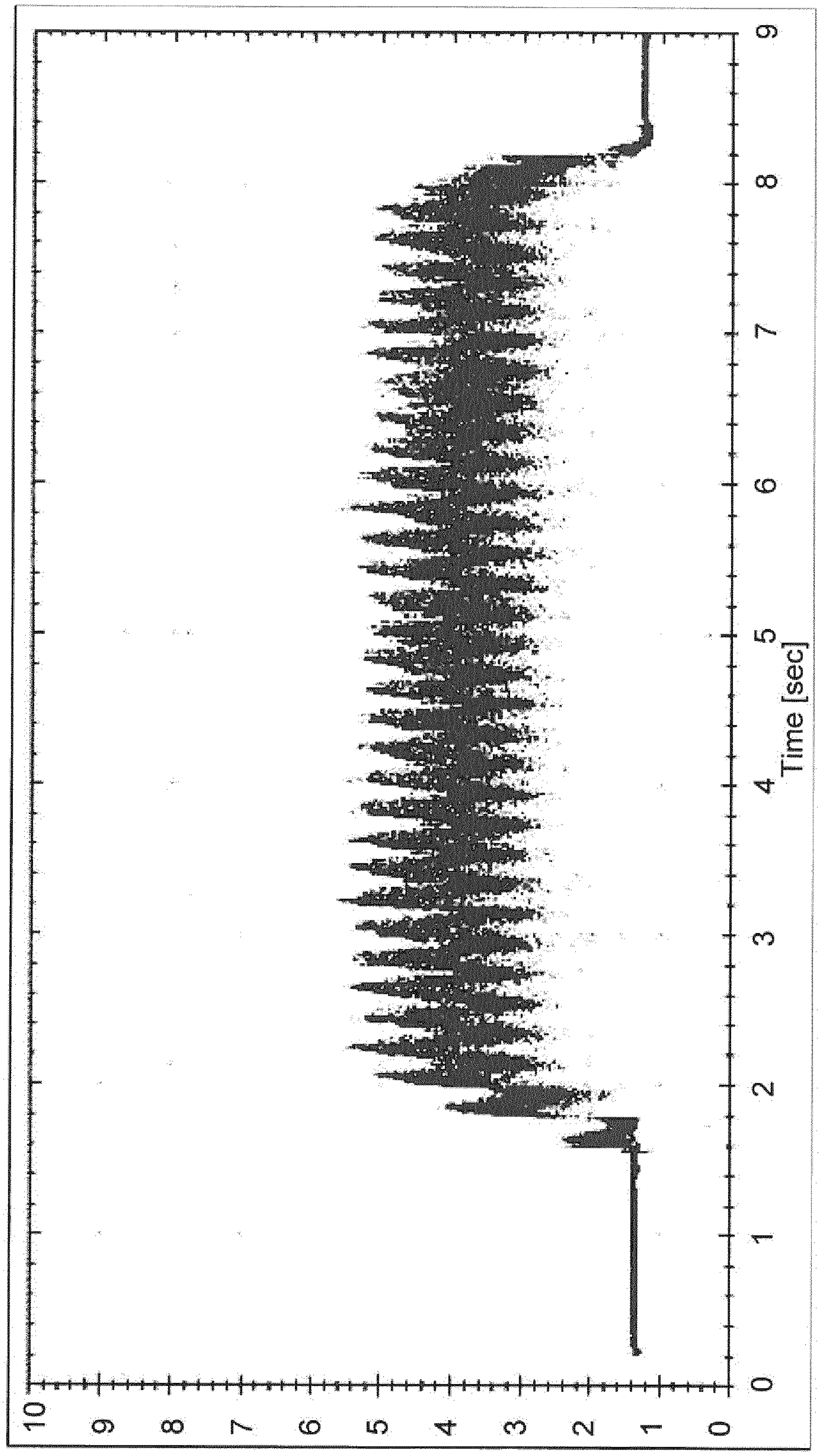


Fig. 13

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102007024789 B3
- EP 2094429 B1
- DE 112010003406 T5
- DE 102014107716 B3
- DE 4106007 A1
- EP 2543464 A2
- DE 102013015656 A1
- WO 2014138939 A1
- US 6900410 B2


### In der Beschreibung aufgeführte Nicht-Patentliteratur


- **M. SCHNEIDER.** Von Werkzeugstahl bis zur Superlegierung. *Laser-Journal,* 2013, vol. 4, 24-27